# EUROPEAN PATENT SPECIFICATION

(11) **EP 3 872 620 B1**
(45) Date of publication and mention of the grant of the patent: **22.11.2023**
(21) Application number: 21167975.8
(22) Date of filing: 27.03.2019
(51) Int. Cl.: G06F 3/16, G10L 15/22, H04M 11/00, H04M 3/42, H04M 3/527, G10L 15/30, G10L 13/00, G10L 15/26

(54) **VOICE INTERACTION AT A PRIMARY DEVICE TO ACCESS CALL FUNCTIONALITY OF A COMPANION DEVICE**
SPRACHINTERAKTION AN EINER PRIMÄREN VORRICHTUNG FÜR DEN ZUGRIFF AUF DIE ANRUFFUNKTIONALITÄT EINER BEGLEITVORRICHTUNG
INTERACTION VOCALE AU NIVEAU D'UN DISPOSITIF PRIMAIRE POUR ACCÉDER À UNE FONCTIONNALITÉ D'APPEL D'UN DISPOSITIF COMPAGNON

(30) Priority: 01.06.2018 US 201862679177 P; 12.06.2018 DK PA201870373; 27.08.2018 US 201816113119
(43) Date of publication of application: 01.09.2021
(62) Divisional of application: 19716749.7
(73) Proprietor: Apple Inc., Cupertino, CA 95014 (US)
(72) Inventor: SCHRAMM, Karl Ferdinand, Cupertino 95014 (US); BINDER, Justin, Cupertino 95014 (US); PHIPPS, Benjamin S., Cupertino 95014 (US); SUNG, Po Keng, Cupertino 95014 (US)
(74) Representative: COPA Copenhagen Patents

(56) References cited:
- EP-A2- 3 125 097
- WO-A1-2016/085776
- US-A1- 2009 018 839
- US-A1- 2009 204 409

## Description

### CROSS-REFERENCE TO RELATED APPLICATIONS

This application claims priority from U.S. Provisional Application No. 62/679,177, filed June 1, 2018, entitled "Voice Interaction at a Primary Device to Access Call Functionality of a Companion Device;" U.S. Non-Provisional Application No. 16/113,119, filed August 27, 2018, entitled "Voice Interaction at a Primary Device to Access Call Functionality of a Companion Device;" and Danish Application No. PA201870373, filed June 12, 2018, entitled "Voice Interaction at a Primary Device to Access Call Functionality of a Companion Device".

### FIELD

This relates generally to intelligent automated assistants and, more specifically, to using intelligent automated assistants to access call functionality of a companion device from a primary device.

### BACKGROUND

Intelligent automated assistants (or digital assistants) can provide a beneficial interface between human users and electronic devices. Such assistants can allow users to interact with devices or systems using natural language in spoken and/or text forms. For example, a user can provide a speech input containing a user request to a digital assistant operating on an electronic device. The digital assistant can interpret the user's intent from the speech input and operationalize the user's intent into tasks. The tasks can then be performed by executing one or more services of the electronic device, and a relevant output responsive to the user request can be returned to the user.

Patent document US 2009/204409 A1 shows a small electronic device comprising a digital assistant being paired with a companion device to access call functionality.

### SUMMARY

Techniques for using voice interaction at a primary device to access call functionality on a companion device are described herein. The invention is defined by the accompanying claims.

### BRIEF DESCRIPTION OF THE DRAWINGS

FIG. 1 is a block diagram illustrating a system and environment for implementing a digital assistant, according to various examples.
FIG. 2A is a block diagram illustrating a portable multifunction device implementing the client-side portion of a digital assistant, according to various examples.
FIG. 2B is a block diagram illustrating exemplary components for event handling, according to various examples.
FIG. 3 illustrates a portable multifunction device implementing the client-side portion of a digital assistant, according to various examples.
FIG. 4 is a block diagram of an exemplary multifunction device with a display and a touch-sensitive surface, according to various examples.
FIG. 5A illustrates an exemplary user interface for a menu of applications on a portable multifunction device, according to various examples.
FIG. 5B illustrates an exemplary user interface for a multifunction device with a touch-sensitive surface that is separate from the display, according to various examples.
FIG. 6A illustrates a personal electronic device, according to various examples.
FIG. 6B is a block diagram illustrating a personal electronic device, according to various examples.
FIG. 7A is a block diagram illustrating a digital assistant system or a server portion thereof, according to various examples.
FIG. 7B illustrates the functions of the digital assistant shown in FIG. 7A, according to various examples.
FIG. 7C illustrates a portion of an ontology, according to various examples.
FIG. 8 illustrates techniques for using voice interaction at a primary device to cause a companion device to place a call, according to various examples.
FIG. 9 illustrates techniques for using voice interaction at a primary device to cause a companion device to answer an incoming call, according to various examples.
FIG. 10 illustrates techniques for using voice interaction at a primary device to cause a companion device to perform call-related tasks while the companion device is engaged in an active call, according to various examples.
FIG. 11 illustrates techniques for using voice interaction at a primary device to cause a companion device to provide call-related information, according to the invention.
FIGS. 12A-12B illustrate a process for using voice interaction to access call functionality of a companion device, according to various examples.

### DETAILED DESCRIPTION

In the following description of examples, reference is made to the accompanying drawings in which are shown by way of illustration specific examples that can be practiced. It is to be understood that other examples can be used and structural changes can be made without departing from the scope of the various examples.

It can be desirable to access call functionality using voice interaction. For example, a user sitting in their living room at home may wish to answer an incoming call on their smartphone (e.g., iPhone^{®}) that was left in the kitchen. Instead of retrieving the smartphone to answer the call, it can be more convenient to use voice interaction (e.g., via a digital assistant) to answer the call. Directly processing a voice request at the smartphone can, however, be ineffective and unreliable. For example, the microphone and speaker of the smartphone can be unsuitable for far-field voice interactions (e.g., between the kitchen and the living room). In accordance with the techniques described herein, a primary device (e.g., smart speaker) can be used to access the call functionality of a companion device (e.g., smartphone). For example, a user may have access to a smart speaker (e.g., HomePod^{®}) in their living room. The smart speaker is paired with the user's smartphone and thus the smart speaker can wirelessly communicate with the user's smartphone to access its call functions. It can thus be desirable to access the call functionality of the smartphone using voice interactions with the smart speaker. In particular, the microphone and speaker of the smart speaker can be configured to produce better sound quality for far-field voice interactions. Moreover, the smart speaker can serve as a hub to more quickly, efficiently, and intelligently control and coordinate access to the call functionality of the smartphone. For example, the smart speaker can coordinate information between the user, a digital assistant server, and the user's smartphone to achieve a desirable user experience where voice interactions are accurately interpreted, response latency is reduced, and sound quality is superior.

In one exemplary technique for using voice interaction to access call functionality of a companion device (e.g., smartphone), a primary device (e.g., smart speaker) is used to cause the companion device to answer an incoming call. In this technique, a signal indicating the incoming call at the companion device is received at the primary device from the companion device. The primary device receives an utterance from a user and causes a server to determine, based on the user utterance and contextual information, a user intent corresponding to the user utterance. The contextual information is based on the received signal. In accordance with the user intent corresponding to an actionable intent of answering the incoming call, a plurality of operations are performed. The plurality of operations include receiving, from the server, a command representing a task to satisfy the actionable intent of answering the incoming call. The plurality of operations further include providing, based on the command, instructions to the companion device to answer the incoming call and relay audio data of the answered incoming call to the electronic device. In accordance with the instructions successfully causing the companion device to answer the incoming call, audio output at the speaker of the electronic device is outputted according to the audio data of the answered incoming call received from the companion device.

### 1. System and Environment

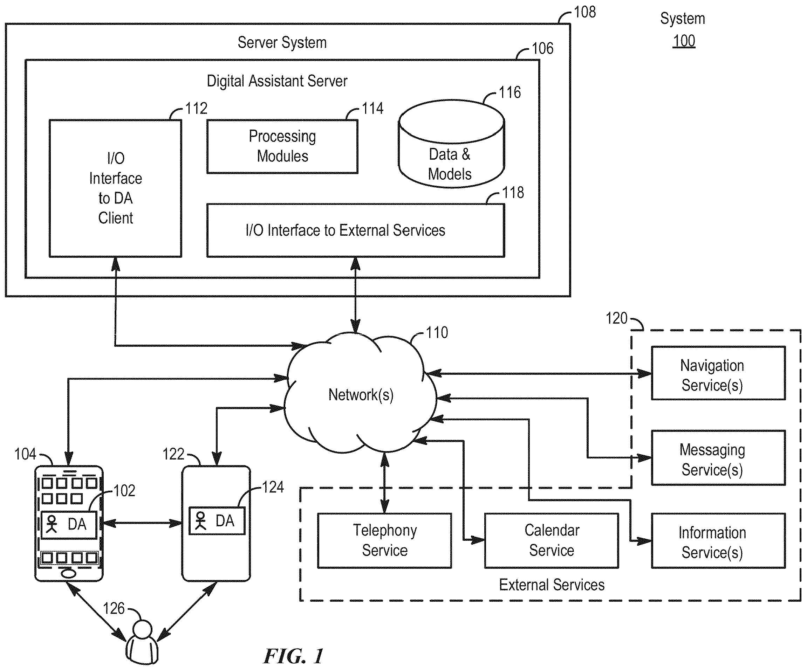

FIG. 1 illustrates a block diagram of system 100 according to various examples. In some examples, system 100 implements a digital assistant. The terms "digital assistant," "virtual assistant," "intelligent automated assistant," or "automatic digital assistant" refer to any information processing system that interprets natural language input in spoken and/or textual form to infer user intent, and performs actions based on the inferred user intent. For example, to act on an inferred user intent, the system performs one or more of the following: identifying a task flow with steps and parameters designed to accomplish the inferred user intent, inputting specific requirements from the inferred user intent into the task flow; executing the task flow by invoking programs, methods, services, APIs, or the like; and generating output responses to the user in an audible (e.g., speech) and/or visual form.

Specifically, a digital assistant is capable of accepting a user request at least partially in the form of a natural language command, request, statement, narrative, and/or inquiry. Typically, the user request seeks either an informational answer or performance of a task by the digital assistant. A satisfactory response to the user request includes a provision of the requested informational answer, a performance of the requested task, or a combination of the two. For example, a user asks the digital assistant a question, such as "Where am I right now?" Based on the user's current location, the digital assistant answers, "You are in Central Park near the west gate." The user also requests the performance of a task, for example, "Please invite my friends to my girlfriend's birthday party next week." In response, the digital assistant can acknowledge the request by saying "Yes, right away," and then send a suitable calendar invite on behalf of the user to each of the user's friends listed in the user's electronic address book. During performance of a requested task, the digital assistant sometimes interacts with the user in a continuous dialogue involving multiple exchanges of information over an extended period of time. There are numerous other ways of interacting with a digital assistant to request information or performance of various tasks. In addition to providing verbal responses and taking programmed actions, the digital assistant also provides responses in other visual or audio forms, e.g., as text, alerts, music, videos, animations, etc.

As shown in FIG. 1, a digital assistant is implemented according to a client-server model. The digital assistant includes client-side portions (hereafter "DA client" 102 and 124) executed on user device 104 and/or second user device122. The digital assistant also includes server-side portion 106 (hereafter "DA server 106") executed on server system 108. DA client 102/124 communicates with DA server 106 through one or more networks 110. DA client 102/124 provides client-side functionalities such as user-facing input and output processing and communication with DA server 106. DA server 106 provides server-side functionalities for any number of DA clients each residing on a respective user device.

In some examples, DA server 106 includes client-facing I/O interface 112, one or more processing modules 114, data and models 116, and I/O interface to external services 118. The client-facing I/O interface 112 facilitates the client-facing input and output processing for DA server 106. One or more processing modules 114 utilize data and models 116 to process speech input and determine the user's intent based on natural language input. Further, one or more processing modules 114 perform task execution based on inferred user intent. In some examples, DA server 106 communicates with external services 120 through network(s) 110 for task completion or information acquisition. I/O interface to external services 118 facilitates such communications.

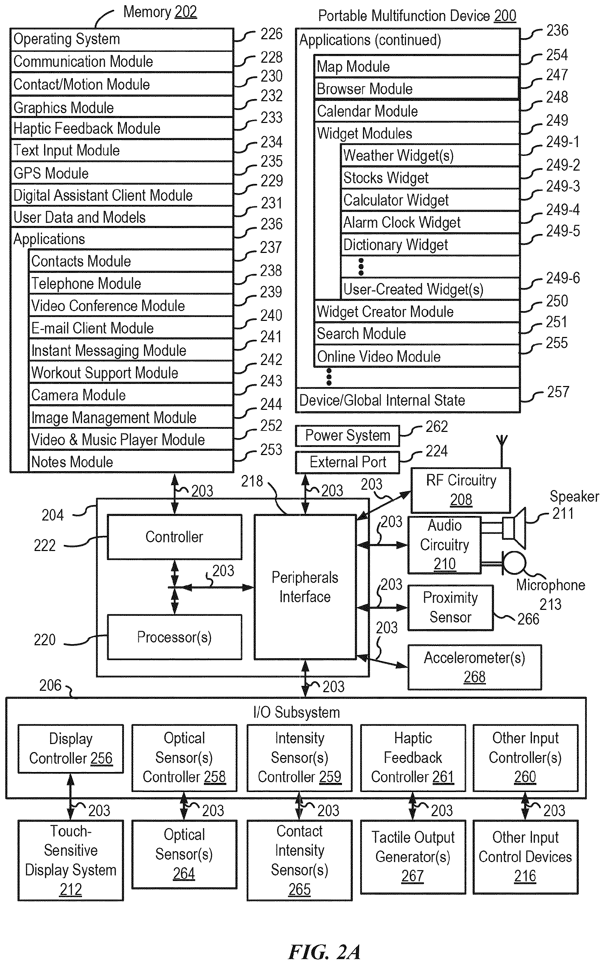

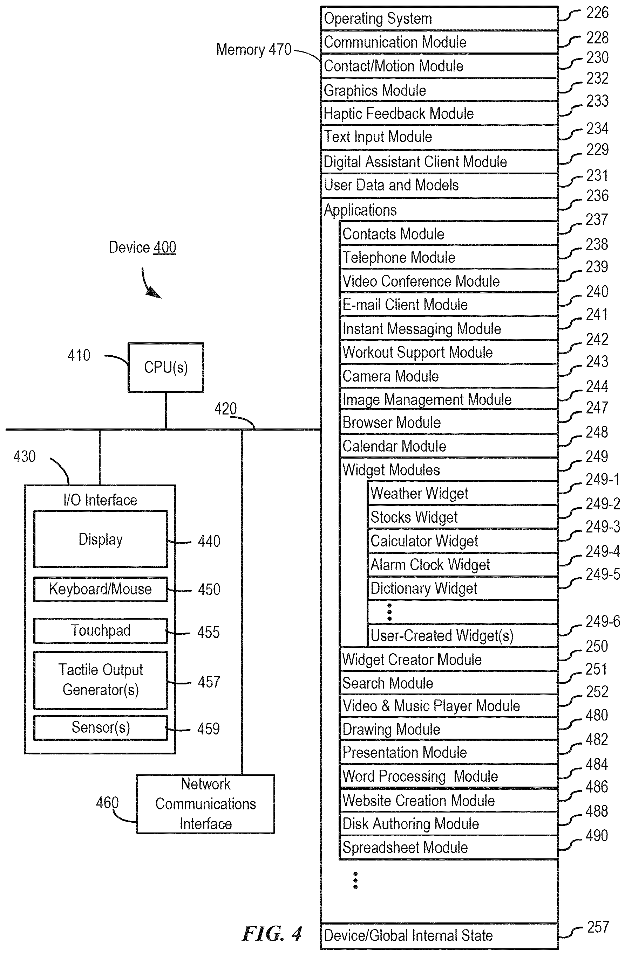

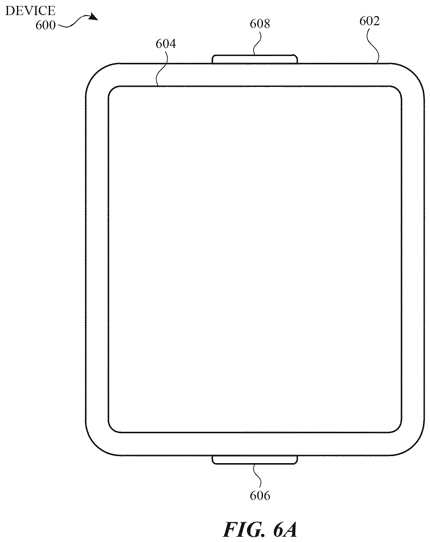

User device 104 can be any suitable electronic device. In some examples, user device 104 is a portable multifunctional device (e.g., device 200, described below with reference to FIG. 2A), a multifunctional device (e.g., device 400, described below with reference to FIG. 4), or a personal electronic device (e.g., device 600, described below with reference to FIG. 6A-6B.) A portable multifunctional device is, for example, a mobile telephone that also contains other functions, such as PDA and/or music player functions. Specific examples of portable multifunction devices include the Apple Watch^{®}, iPhone^{®}, iPod Touch^{®}, and iPad^{®} devices from Apple Inc. of Cupertino, California. Other examples of portable multifunction devices include, without limitation, earphones/headphones, speakers, and laptop or tablet computers. Further, in some examples, user device 104 is a non-portable multifunctional device. In particular, user device 104 is a desktop computer, a game console, a speaker (e.g., HomePod^{®}), a television, or a television set-top box (AppleTV^{®}). In some examples, user device 104 includes a touch-sensitive surface (e.g., touch screen displays and/or touchpads). Further, user device 104 optionally includes one or more other physical user-interface devices, such as a physical keyboard, a mouse, and/or a joystick. Various examples of electronic devices, such as multifunctional devices, are described below in greater detail.

Examples of communication network(s) 110 include local area networks (LAN) and wide area networks (WAN), e.g., the Internet. Communication network(s) 110 is implemented using any known network protocol, including various wired or wireless protocols, such as, for example, Ethernet, Universal Serial Bus (USB), FIREWIRE, Global System for Mobile Communications (GSM), Enhanced Data GSM Environment (EDGE), code division multiple access (CDMA), time division multiple access (TDMA), Bluetooth, Wi-Fi, voice over Internet Protocol (VoIP), Wi-MAX, or any other suitable communication protocol.

Server system 108 is implemented on one or more standalone data processing apparatus or a distributed network of computers. In some examples, server system 108 also employs various virtual devices and/or services of third-party service providers (e.g., third-party cloud service providers) to provide the underlying computing resources and/or infrastructure resources of server system 108.

According to the invention, second user device 122 serves as a primary device and user device 104 serves as a companion device of second user device 122. The user device 104 is paired to second user device 122 and a wireless communication connection is established with each other upon successfully exchanging authentication information. In some examples, user device 104 is a smart phone device (e.g., iPhone^{®}) having features similar to those of device 200 or 400, described below with reference to FIGS. 2A, 4, and 6A-6B. In some examples, second user device 122 is a smart speaker device (e.g., HomePod^{®}) having only a subset of the features included in device 200 or 400. For example, second user device 122 does not include a display or features that enable stand-alone call functionality (e.g., telephone module 238 or video conference module 239). Specifically, in these examples, second user device 122 cannot place a call or answer a call without being communicatively coupled to user device 104. Upon establishing a wireless communication connection, second user device 122 is communicatively coupled to user device 104 via a direct communication connection, such as Bluetooth, NFC, BTLE, or the like, or via a wireless network, such as a local Wi-Fi network. In some examples, as described in greater detail below, second user device 122 accesses the call functionality of user device 104 to perform call-related functions. For example, a user can provide voice input to second user device 122 to place a call or answer an incoming call on user device 104.

Although the digital assistant shown in FIG. 1 includes both a client-side portion (e.g., DA client 102) and a server-side portion (e.g., DA server 106), in some examples not being part of the invention, the functions of a digital assistant are implemented as a standalone application installed on a user device. In addition, the divisions of functionalities between the client and server portions of the digital assistant can vary in different implementations. For instance, in some examples, the DA client is a thin-client that provides only user-facing input and output processing functions, and delegates all other functionalities of the digital assistant to a backend server.

### 2. Electronic Devices

Attention is now directed toward embodiments of electronic devices for implementing the client-side portion of a digital assistant. FIG. 2A is a block diagram illustrating portable multifunction device 200 with touch-sensitive display system 212 in accordance with some embodiments. Touch-sensitive display 212 is sometimes called a "touch screen" for convenience and is sometimes known as or called a "touch-sensitive display system." Device 200 includes memory 202 (which optionally includes one or more computer-readable storage mediums), memory controller 222, one or more processing units (CPUs) 220, peripherals interface 218, RF circuitry 208, audio circuitry 210, speaker 211, microphone 213, input/output (I/O) subsystem 206, other input control devices 216, and external port 224. Device 200 optionally includes one or more optical sensors 264. Device 200 optionally includes one or more contact intensity sensors 265 for detecting intensity of contacts on device 200 (e.g., a touch-sensitive surface such as touch-sensitive display system 212 of device 200). Device 200 optionally includes one or more tactile output generators 267 for generating tactile outputs on device 200 (e.g., generating tactile outputs on a touch-sensitive surface such as touch-sensitive display system 212 of device 200 or touchpad 455 of device 400). These components optionally communicate over one or more communication buses or signal lines 203.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 200 is only one example of a portable multifunction device, and that device 200 optionally has more or fewer components than shown, optionally combines two or more components, or optionally has a different configuration or arrangement of the components. The various components shown in FIG. 2A are implemented in hardware, software, or a combination of both hardware and software, including one or more signal processing and/or application-specific integrated circuits.

Memory 202 includes one or more computer-readable storage mediums. The computer-readable storage mediums are, for example, tangible and non-transitory. Memory 202 includes high-speed random access memory and also includes non-volatile memory, such as one or more magnetic disk storage devices, flash memory devices, or other non-volatile solid-state memory devices. Memory controller 222 controls access to memory 202 by other components of device 200.

In some examples, a non-transitory computer-readable storage medium of memory 202 is used to store instructions (e.g., for performing aspects of processes described below) for use by or in connection with an instruction execution system, apparatus, or device, such as a computer-based system, processor-containing system, or other system that can fetch the instructions from the instruction execution system, apparatus, or device and execute the instructions. In other examples, the instructions (e.g., for performing aspects of the processes described below) are stored on a non-transitory computer-readable storage medium (not shown) of the server system 108 or are divided between the non-transitory computer-readable storage medium of memory 202 and the non-transitory computer-readable storage medium of server system 108.

Peripherals interface 218 is used to couple input and output peripherals of the device to CPU 220 and memory 202. The one or more processors 220 run or execute various software programs and/or sets of instructions stored in memory 202 to perform various functions for device 200 and to process data. In some embodiments, peripherals interface 218, CPU 220, and memory controller 222 are implemented on a single chip, such as chip 204. In some other embodiments, they are implemented on separate chips.

RF (radio frequency) circuitry 208 receives and sends RF signals, also called electromagnetic signals. RF circuitry 208 converts electrical signals to/from electromagnetic signals and communicates with communications networks and other communications devices via the electromagnetic signals. RF circuitry 208 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 208 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 208 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

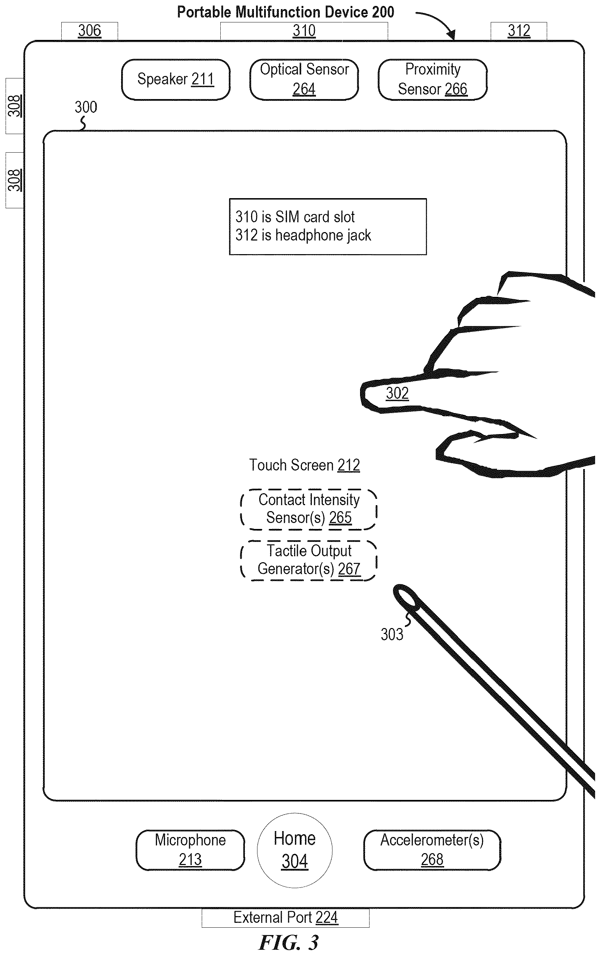

Audio circuitry 210, speaker 211, and microphone 213 provide an audio interface between a user and device 200. Audio circuitry 210 receives audio data from peripherals interface 218, converts the audio data to an electrical signal, and transmits the electrical signal to speaker 211. Speaker 211 converts the electrical signal to human-audible sound waves. Audio circuitry 210 also receives electrical signals converted by microphone 213 from sound waves. Audio circuitry 210 converts the electrical signal to audio data and transmits the audio data to peripherals interface 218 for processing. Audio data are retrieved from and/or transmitted to memory 202 and/or RF circuitry 208 by peripherals interface 218. In some embodiments, audio circuitry 210 also includes a headset jack (e.g., 312, FIG. 3). The headset jack provides an interface between audio circuitry 210 and removable audio input/output peripherals, such as output-only headphones or a headset with both output (e.g., a headphone for one or both ears) and input (e.g., a microphone).

I/O subsystem 206 couples input/output peripherals on device 200, such as touch screen 212 and other input control devices 216, to peripherals interface 218. I/O subsystem 206 optionally includes display controller 256, optical sensor controller 258, intensity sensor controller 259, haptic feedback controller 261, and one or more input controllers 260 for other input or control devices. The one or more input controllers 260 receive/send electrical signals from/to other input control devices 216. The other input control devices 216 optionally include physical buttons (e.g., push buttons, rocker buttons, etc.), dials, slider switches, joysticks, click wheels, and so forth. In some alternate embodiments, input controller(s) 260 are, optionally, coupled to any (or none) of the following: a keyboard, an infrared port, a USB port, and a pointer device such as a mouse. The one or more buttons (e.g., 308, FIG. 3) optionally include an up/down button for volume control of speaker 211 and/or microphone 213. The one or more buttons optionally include a push button (e.g., 306, FIG. 3).

A quick press of the push button disengages a lock of touch screen 212 or begin a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849. A longer press of the push button (e.g., 306) turns power to device 200 on or off The user is able to customize a functionality of one or more of the buttons. Touch screen 212 is used to implement virtual or soft buttons and one or more soft keyboards.

Touch-sensitive display 212 provides an input interface and an output interface between the device and a user. Display controller 256 receives and/or sends electrical signals from/to touch screen 212. Touch screen 212 displays visual output to the user. The visual output includes graphics, text, icons, video, and any combination thereof (collectively termed "graphics"). In some embodiments, some or all of the visual output correspond to user-interface objects.

Touch screen 212 has a touch-sensitive surface, sensor, or set of sensors that accepts input from the user based on haptic and/or tactile contact. Touch screen 212 and display controller 256 (along with any associated modules and/or sets of instructions in memory 202) detect contact (and any movement or breaking of the contact) on touch screen 212 and convert the detected contact into interaction with user-interface objects (e.g., one or more soft keys, icons, web pages, or images) that are displayed on touch screen 212. In an exemplary embodiment, a point of contact between touch screen 212 and the user corresponds to a finger of the user.

Touch screen 212 uses LCD (liquid crystal display) technology, LPD (light emitting polymer display) technology, or LED (light emitting diode) technology, although other display technologies may be used in other embodiments. Touch screen 212 and display controller 256 detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 212. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 212 is analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 212 displays visual output from device 200, whereas touch-sensitive touchpads do not provide visual output.

A touch-sensitive display in some embodiments of touch screen 212 is as described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 212 has, for example, a video resolution in excess of 100 dpi. In some embodiments, the touch screen has a video resolution of approximately 160 dpi. The user makes contact with touch screen 212 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 200 includes a touchpad (not shown) for activating or deactivating particular functions. In some embodiments, the touchpad is a touch-sensitive area of the device that, unlike the touch screen, does not display visual output. The touchpad is a touch-sensitive surface that is separate from touch screen 212 or an extension of the touch-sensitive surface formed by the touch screen.

Device 200 also includes power system 262 for powering the various components. Power system 262 includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 200 also includes one or more optical sensors 264. FIG. 2A shows an optical sensor coupled to optical sensor controller 258 in I/O subsystem 206. Optical sensor 264 includes charge-coupled device (CCD) or complementary metal-oxide semiconductor (CMOS) phototransistors. Optical sensor 264 receives light from the environment, projected through one or more lenses, and converts the light to data representing an image. In conjunction with imaging module 243 (also called a camera module), optical sensor 264 captures still images or video. In some embodiments, an optical sensor is located on the back of device 200, opposite touch screen display 212 on the front of the device so that the touch screen display is used as a viewfinder for still and/or video image acquisition. In some embodiments, an optical sensor is located on the front of the device so that the user's image is obtained for video conferencing while the user views the other video conference participants on the touch screen display. In some embodiments, the position of optical sensor 264 can be changed by the user (e.g., by rotating the lens and the sensor in the device housing) so that a single optical sensor 264 is used along with the touch screen display for both video conferencing and still and/or video image acquisition.

Device 200 optionally also includes one or more contact intensity sensors 265. FIG. 2A shows a contact intensity sensor coupled to intensity sensor controller 259 in I/O subsystem 206. Contact intensity sensor 265 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 265 receives contact intensity information (e.g., pressure information or a proxy for pressure information) from the environment. In some embodiments, at least one contact intensity sensor is collocated with, or proximate to, a touch-sensitive surface (e.g., touch-sensitive display system 212). In some embodiments, at least one contact intensity sensor is located on the back of device 200, opposite touch screen display 212, which is located on the front of device 200.

Device 200 also includes one or more proximity sensors 266. FIG. 2A shows proximity sensor 266 coupled to peripherals interface 218. Alternately, proximity sensor 266 is coupled to input controller 260 in I/O subsystem 206. Proximity sensor 266 is performed as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals". In some embodiments, the proximity sensor turns off and disables touch screen 212 when the multifunction device is placed near the user's ear (e.g., when the user is making a phone call).

Device 200 optionally also includes one or more tactile output generators 267. FIG. 2A shows a tactile output generator coupled to haptic feedback controller 261 in I/O subsystem 206. Tactile output generator 267 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 265 receives tactile feedback generation instructions from haptic feedback module 233 and generates tactile outputs on device 200 that are capable of being sensed by a user of device 200. In some embodiments, at least one tactile output generator is collocated with, or proximate to, a touch-sensitive surface (e.g., touch-sensitive display system 212) and, optionally, generates a tactile output by moving the touch-sensitive surface vertically (e.g., in/out of a surface of device 200) or laterally (e.g., back and forth in the same plane as a surface of device 200). In some embodiments, at least one tactile output generator sensor is located on the back of device 200, opposite touch screen display 212, which is located on the front of device 200.

Device 200 also includes one or more accelerometers 268. FIG. 2A shows accelerometer 268 coupled to peripherals interface 218. Alternately, accelerometer 268 is coupled to an input controller 260 in I/O subsystem 206. Accelerometer 268 performs, for example, as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer". In some embodiments, information is displayed on the touch screen display in a portrait view or a landscape view based on an analysis of data received from the one or more accelerometers. Device 200 optionally includes, in addition to accelerometer(s) 268, a magnetometer (not shown) and a GPS (or GLONASS or other global navigation system) receiver (not shown) for obtaining information concerning the location and orientation (e.g., portrait or landscape) of device 200.

In some embodiments, the software components stored in memory 202 include operating system 226, communication module (or set of instructions) 228, contact/motion module (or set of instructions) 230, graphics module (or set of instructions) 232, text input module (or set of instructions) 234, Global Positioning System (GPS) module (or set of instructions) 235, Digital Assistant Client Module 229, and applications (or sets of instructions) 236. Further, memory 202 stores data and models, such as user data and models 231. Furthermore, in some embodiments, memory 202 (FIG. 2A) or 470 (FIG. 4) stores device/global internal state 257, as shown in FIGS. 2A and 4. Device/global internal state 257 includes one or more of: active application state, indicating which applications, if any, are currently active; display state, indicating what applications, views or other information occupy various regions of touch screen display 212; sensor state, including information obtained from the device's various sensors and input control devices 216; and location information concerning the device's location and/or attitude.

Operating system 226 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 228 facilitates communication with other devices over one or more external ports 224 and also includes various software components for handling data received by RF circuitry 208 and/or external port 224. External port 224 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices. In some examples, communication module 228 is configured to establish a wireless communication connection between device 200 and a second device. In particular, communication module 228 coordinates the exchange of authentication information with the second device to determine whether the second device is a registered device of device 200. Upon determining, based on the exchanged authentication, that the second device is a registered device of device 200, communication module 228 establishes (e.g., using RF circuitry 208) a wireless communication connection with the second device.

Contact/motion module 230 optionally detects contact with touch screen 212 (in conjunction with display controller 256) and other touch-sensitive devices (e.g., a touchpad or physical click wheel). Contact/motion module 230 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 230 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 230 and display controller 256 detect contact on a touchpad.

In some embodiments, contact/motion module 230 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 200). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 230 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 232 includes various known software components for rendering and displaying graphics on touch screen 212 or other display, including components for changing the visual impact (e.g., brightness, transparency, saturation, contrast, or other visual property) of graphics that are displayed. As used herein, the term "graphics" includes any object that can be displayed to a user, including without limitation, text, web pages, icons (such as user-interface objects including soft keys), digital images, videos, animations, and the like.

In some embodiments, graphics module 232 stores data representing graphics to be used. Each graphic is, optionally, assigned a corresponding code. Graphics module 232 receives, from applications etc., one or more codes specifying graphics to be displayed along with, if necessary, coordinate data and other graphic property data, and then generates screen image data to output to display controller 256.

Haptic feedback module 233 includes various software components for generating instructions used by tactile output generator(s) 267 to produce tactile outputs at one or more locations on device 200 in response to user interactions with device 200.

Text input module 234, which is, in some examples, a component of graphics module 232, provides soft keyboards for entering text in various applications (e.g., contacts 237, email 240, IM 241, browser 247, and any other application that needs text input).

GPS module 235 determines the location of the device and provides this information for use in various applications (e.g., to telephone 238 for use in location-based dialing; to camera 243 as picture/video metadata; and to applications that provide location-based services such as weather widgets, local yellow page widgets, and map/navigation widgets).

Digital assistant client module 229 includes various client-side digital assistant instructions to provide the client-side functionalities of the digital assistant. For example, digital assistant client module 229 is capable of accepting voice input (e.g., speech input), text input, touch input, and/or gestural input through various user interfaces (e.g., microphone 213, accelerometer(s) 268, touch-sensitive display system 212, optical sensor(s) 229, other input control devices 216, etc.) of portable multifunction device 200. Digital assistant client module 229 is also capable of providing output in audio (e.g., speech output), visual, and/or tactile forms through various output interfaces (e.g., speaker 211, touch-sensitive display system 212, tactile output generator(s) 267, etc.) of portable multifunction device 200. For example, output is provided as voice, sound, alerts, text messages, menus, graphics, videos, animations, vibrations, and/or combinations of two or more of the above. During operation, digital assistant client module 229 communicates with DA server 106 using RF circuitry 208.

User data and models 231 include various data associated with the user (e.g., user-specific vocabulary data, user preference data, user-specified name pronunciations, data from the user's electronic address book, to-do lists, shopping lists, etc.) to provide the client-side functionalities of the digital assistant. Further, user data and models 231 include various models (e.g., speech recognition models, statistical language models, natural language processing models, ontology, task flow models, service models, etc.) for processing user input and determining user intent.

In some examples, digital assistant client module 229 utilizes the various sensors, subsystems, and peripheral devices of portable multifunction device 200 to gather additional information from the surrounding environment of the portable multifunction device 200 to establish a context associated with a user, the current user interaction, and/or the current user input. In some examples, digital assistant client module 229 provides the contextual information or a subset thereof with the user input to DA server 106 to help infer the user's intent. In some examples, the digital assistant also uses the contextual information to determine how to prepare and deliver outputs to the user. Contextual information is referred to as context data.

In some examples, the contextual information that accompanies the user input includes sensor information, e.g., lighting, ambient noise, ambient temperature, images or videos of the surrounding environment, etc. In some examples, the contextual information can also include the physical state of the device, e.g., device orientation, device location, device temperature, power level, speed, acceleration, motion patterns, cellular signals strength, etc. In some examples, information related to the software state of DA server 106, e.g., running processes, installed programs, past and present network activities, background services, error logs, resources usage, etc., and of portable multifunction device 200 is provided to DA server 106 as contextual information associated with a user input.

In some examples, the digital assistant client module 229 selectively provides information (e.g., user data 231) stored on the portable multifunction device 200 in response to requests from DA server 106. In some examples, digital assistant client module 229 also elicits additional input from the user via a natural language dialogue or other user interfaces upon request by DA server 106. Digital assistant client module 229 passes the additional input to DA server 106 to help DA server 106 in intent deduction and/or fulfillment of the user's intent expressed in the user request.

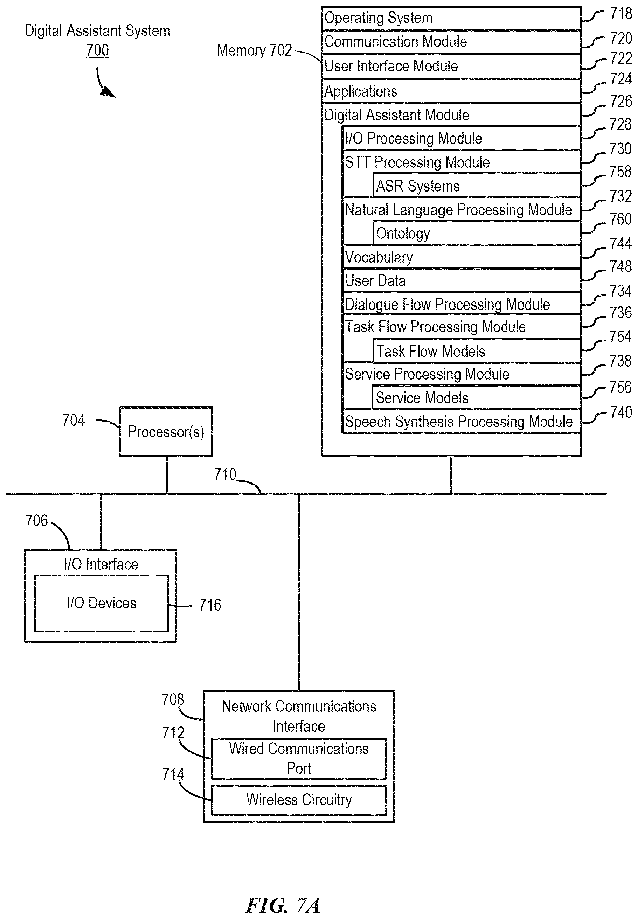

A more detailed description of a digital assistant is described below with reference to FIGS. 7A-7C. It should be recognized that digital assistant client module 229 can include any number of the sub-modules of digital assistant module 726 described below.

Applications 236 include the following modules (or sets of instructions), or a subset or superset thereof:
- Contacts module 237 (sometimes called an address book or contact list);
- Telephone module 238;
- Video conference module 239;
- E-mail client module 240;
- Instant messaging (IM) module 241;
- Workout support module 242;
- Camera module 243 for still and/or video images;
- Image management module 244;
- Video player module;
- Music player module;
- Browser module 247;
- Calendar module 248;
- Widget modules 249, which includes, in some examples, one or more of: weather widget 249-1, stocks widget 249-2, calculator widget 249-3, alarm clock widget 249-4, dictionary widget 249-5, and other widgets obtained by the user, as well as user-created widgets 249-6;
- Widget creator module 250 for making user-created widgets 249-6;
- Search module 251;
- Video and music player module 252, which merges video player module and music player module;
- Notes module 253;
- Map module 254; and/or
- Online video module 255.

Examples of other applications 236 that are stored in memory 202 include other word processing applications, other image editing applications, drawing applications, presentation applications, JAVA-enabled applications, encryption, digital rights management, voice recognition, and voice replication.

In conjunction with touch screen 212, display controller 256, contact/motion module 230, graphics module 232, and text input module 234, contacts module 237 are used to manage an address book or contact list (e.g., stored in application internal state 292 of contacts module 237 in memory 202 or memory 470), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 238, video conference module 239, e-mail 240, or IM 241; and so forth.

In conjunction with RF circuitry 208, audio circuitry 210, speaker 211, microphone 213, touch screen 212, display controller 256, contact/motion module 230, graphics module 232, and text input module 234, telephone module 238 are used to enter a sequence of characters corresponding to a telephone number, access one or more telephone numbers in contacts module 237, modify a telephone number that has been entered, dial a respective telephone number, conduct a conversation, and disconnect or hang up when the conversation is completed. As noted above, the wireless communication uses any of a plurality of communications standards, protocols, and technologies.

In conjunction with RF circuitry 208, audio circuitry 210, speaker 211, microphone 213, touch screen 212, display controller 256, optical sensor 264, optical sensor controller 258, contact/motion module 230, graphics module 232, text input module 234, contacts module 237, and telephone module 238, video conference module 239 includes executable instructions to initiate, conduct, and terminate a video conference between a user and one or more other participants in accordance with user instructions.

In conjunction with RF circuitry 208, touch screen 212, display controller 256, contact/motion module 230, graphics module 232, and text input module 234, e-mail client module 240 includes executable instructions to create, send, receive, and manage e-mail in response to user instructions. In conjunction with image management module 244, e-mail client module 240 makes it very easy to create and send e-mails with still or video images taken with camera module 243.

In conjunction with RF circuitry 208, touch screen 212, display controller 256, contact/motion module 230, graphics module 232, and text input module 234, the instant messaging module 241 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 208, touch screen 212, display controller 256, contact/motion module 230, graphics module 232, text input module 234, GPS module 235, map module 254, and music player module, workout support module 242 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 212, display controller 256, optical sensor(s) 264, optical sensor controller 258, contact/motion module 230, graphics module 232, and image management module 244, camera module 243 includes executable instructions to capture still images or video (including a video stream) and store them into memory 202, modify characteristics of a still image or video, or delete a still image or video from memory 202.

In conjunction with touch screen 212, display controller 256, contact/motion module 230, graphics module 232, text input module 234, and camera module 243, image management module 244 includes executable instructions to arrange, modify (e.g., edit), or otherwise manipulate, label, delete, present (e.g., in a digital slide show or album), and store still and/or video images.

In conjunction with RF circuitry 208, touch screen 212, display controller 256, contact/motion module 230, graphics module 232, and text input module 234, browser module 247 includes executable instructions to browse the Internet in accordance with user instructions, including searching, linking to, receiving, and displaying web pages or portions thereof, as well as attachments and other files linked to web pages.

In conjunction with RF circuitry 208, touch screen 212, display controller 256, contact/motion module 230, graphics module 232, text input module 234, e-mail client module 240, and browser module 247, calendar module 248 includes executable instructions to create, display, modify, and store calendars and data associated with calendars (e.g., calendar entries, to-do lists, etc.) in accordance with user instructions.

In conjunction with RF circuitry 208, touch screen 212, display controller 256, contact/motion module 230, graphics module 232, text input module 234, and browser module 247, widget modules 249 are mini-applications that can be downloaded and used by a user (e.g., weather widget 249-1, stocks widget 249-2, calculator widget 249-3, alarm clock widget 249-4, and dictionary widget 249-5) or created by the user (e.g., user-created widget 249-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 208, touch screen 212, display controller 256, contact/motion module 230, graphics module 232, text input module 234, and browser module 247, the widget creator module 250 are used by a user to create widgets (e.g., turning a user-specified portion of a web page into a widget).

In conjunction with touch screen 212, display controller 256, contact/motion module 230, graphics module 232, and text input module 234, search module 251 includes executable instructions to search for text, music, sound, image, video, and/or other files in memory 202 that match one or more search criteria (e.g., one or more user-specified search terms) in accordance with user instructions.

In conjunction with touch screen 212, display controller 256, contact/motion module 230, graphics module 232, audio circuitry 210, speaker 211, RF circuitry 208, and browser module 247, video and music player module 252 includes executable instructions that allow the user to download and play back recorded music and other sound files stored in one or more file formats, such as MP3 or AAC files, and executable instructions to display, present, or otherwise play back videos (e.g., on touch screen 212 or on an external, connected display via external port 224). In some embodiments, device 200 optionally includes the functionality of an MP3 player, such as an iPod (trademark of Apple Inc.).

In conjunction with touch screen 212, display controller 256, contact/motion module 230, graphics module 232, and text input module 234, notes module 253 includes executable instructions to create and manage notes, to-do lists, and the like in accordance with user instructions.

In conjunction with RF circuitry 208, touch screen 212, display controller 256, contact/motion module 230, graphics module 232, text input module 234, GPS module 235, and browser module 247, map module 254 are used to receive, display, modify, and store maps and data associated with maps (e.g., driving directions, data on stores and other points of interest at or near a particular location, and other location-based data) in accordance with user instructions.

In conjunction with touch screen 212, display controller 256, contact/motion module 230, graphics module 232, audio circuitry 210, speaker 211, RF circuitry 208, text input module 234, e-mail client module 240, and browser module 247, online video module 255 includes instructions that allow the user to access, browse, receive (e.g., by streaming and/or download), play back (e.g., on the touch screen or on an external, connected display via external port 224), send an e-mail with a link to a particular online video, and otherwise manage online videos in one or more file formats, such as H.264. In some embodiments, instant messaging module 241, rather than e-mail client module 240, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules can be combined or otherwise rearranged in various embodiments. For example, video player module can be combined with music player module into a single module (e.g., video and music player module 252, FIG. 2A). In some embodiments, memory 202 stores a subset of the modules and data structures identified above. Furthermore, memory 202 stores additional modules and data structures not described above.

In some embodiments, device 200 is a device where operation of a predefined set of functions on the device is performed exclusively through a touch screen and/or a touchpad. By using a touch screen and/or a touchpad as the primary input control device for operation of device 200, the number of physical input control devices (such as push buttons, dials, and the like) on device 200 is reduced.

The predefined set of functions that are performed exclusively through a touch screen and/or a touchpad optionally include navigation between user interfaces. In some embodiments, the touchpad, when touched by the user, navigates device 200 to a main, home, or root menu from any user interface that is displayed on device 200. In such embodiments, a "menu button" is implemented using a touchpad. In some other embodiments, the menu button is a physical push button or other physical input control device instead of a touchpad.

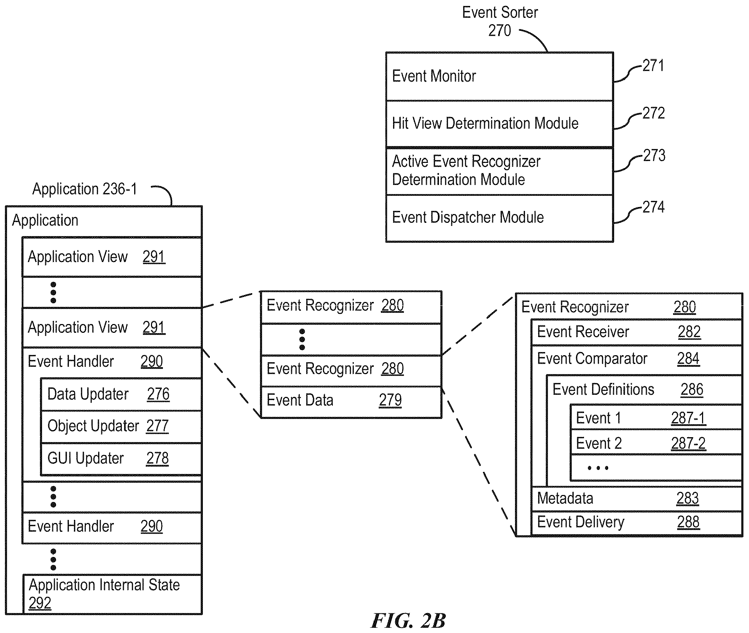

FIG. 2B is a block diagram illustrating exemplary components for event handling in accordance with some embodiments. In some embodiments, memory 202 (FIG. 2A) or 470 (FIG. 4) includes event sorter 270 (e.g., in operating system 226) and a respective application 236-1 (e.g., any of the aforementioned applications 237-251, 255, 480-490).

Event sorter 270 receives event information and determines the application 236-1 and application view 291 of application 236-1 to which to deliver the event information. Event sorter 270 includes event monitor 271 and event dispatcher module 274. In some embodiments, application 236-1 includes application internal state 292, which indicates the current application view(s) displayed on touch-sensitive display 212 when the application is active or executing. In some embodiments, device/global internal state 257 is used by event sorter 270 to determine which application(s) is (are) currently active, and application internal state 292 is used by event sorter 270 to determine application views 291 to which to deliver event information.

In some embodiments, application internal state 292 includes additional information, such as one or more of: resume information to be used when application 236-1 resumes execution, user interface state information that indicates information being displayed or that is ready for display by application 236-1, a state queue for enabling the user to go back to a prior state or view of application 236-1, and a redo/undo queue of previous actions taken by the user.

Event monitor 271 receives event information from peripherals interface 218. Event information includes information about a sub-event (e.g., a user touch on touch-sensitive display 212, as part of a multi-touch gesture). Peripherals interface 218 transmits information it receives from I/O subsystem 206 or a sensor, such as proximity sensor 266, accelerometer(s) 268, and/or microphone 213 (through audio circuitry 210). Information that peripherals interface 218 receives from I/O subsystem 206 includes information from touch-sensitive display 212 or a touch-sensitive surface.

In some embodiments, event monitor 271 sends requests to the peripherals interface 218 at predetermined intervals. In response, peripherals interface 218 transmits event information. In other embodiments, peripherals interface 218 transmits event information only when there is a significant event (e.g., receiving an input above a predetermined noise threshold and/or for more than a predetermined duration).

In some embodiments, event sorter 270 also includes a hit view determination module 272 and/or an active event recognizer determination module 273.

Hit view determination module 272 provides software procedures for determining where a sub-event has taken place within one or more views when touch-sensitive display 212 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected correspond to programmatic levels within a programmatic or view hierarchy of the application. For example, the lowest level view in which a touch is detected is called the hit view, and the set of events that are recognized as proper inputs is determined based, at least in part, on the hit view of the initial touch that begins a touch-based gesture.

Hit view determination module 272 receives information related to sub events of a touch-based gesture. When an application has multiple views organized in a hierarchy, hit view determination module 272 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 272, the hit view typically receives all sub-events related to the same touch or input source for which it was identified as the hit view.

Active event recognizer determination module 273 determines which view or views within a view hierarchy should receive a particular sequence of sub-events. In some embodiments, active event recognizer determination module 273 determines that only the hit view should receive a particular sequence of sub-events. In other embodiments, active event recognizer determination module 273 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 274 dispatches the event information to an event recognizer (e.g., event recognizer 280). In embodiments including active event recognizer determination module 273, event dispatcher module 274 delivers the event information to an event recognizer determined by active event recognizer determination module 273. In some embodiments, event dispatcher module 274 stores in an event queue the event information, which is retrieved by a respective event receiver 282.

In some embodiments, operating system 226 includes event sorter 270. Alternatively, application 236-1 includes event sorter 270. In yet other embodiments, event sorter 270 is a stand-alone module, or a part of another module stored in memory 202, such as contact/motion module 230.

In some embodiments, application 236-1 includes a plurality of event handlers 290 and one or more application views 291, each of which includes instructions for handling touch events that occur within a respective view of the application's user interface. Each application view 291 of the application 236-1 includes one or more event recognizers 280. Typically, a respective application view 291 includes a plurality of event recognizers 280. In other embodiments, one or more of event recognizers 280 are part of a separate module, such as a user interface kit (not shown) or a higher level object from which application 236-1 inherits methods and other properties. In some embodiments, a respective event handler 290 includes one or more of: data updater 276, object updater 277, GUI updater 278, and/or event data 279 received from event sorter 270. Event handler 290 utilizes or calls data updater 276, object updater 277, or GUI updater 278 to update the application internal state 292. Alternatively, one or more of the application views 291 include one or more respective event handlers 290. Also, in some embodiments, one or more of data updater 276, object updater 277, and GUI updater 278 are included in a respective application view 291.

A respective event recognizer 280 receives event information (e.g., event data 279) from event sorter 270 and identifies an event from the event information. Event recognizer 280 includes event receiver 282 and event comparator 284. In some embodiments, event recognizer 280 also includes at least a subset of: metadata 283, and event delivery instructions 288 (which include sub-event delivery instructions).

Event receiver 282 receives event information from event sorter 270. The event information includes information about a sub-event, for example, a touch or a touch movement. Depending on the sub-event, the event information also includes additional information, such as location of the sub-event. When the sub-event concerns motion of a touch, the event information also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 284 compares the event information to predefined event or sub-event definitions and, based on the comparison, determines an event or sub event, or determines or updates the state of an event or sub-event. In some embodiments, event comparator 284 includes event definitions 286. Event definitions 286 contain definitions of events (e.g., predefined sequences of sub-events), for example, event 1 (287-1), event 2 (287-2), and others. In some embodiments, sub-events in an event (287) include, for example, touch begin, touch end, touch movement, touch cancellation, and multiple touching. In one example, the definition for event 1 (287-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (287-2) is a dragging on a displayed object. The dragging, for example, comprises a touch (or contact) on the displayed object for a predetermined phase, a movement of the touch across touch-sensitive display 212, and liftoff of the touch (touch end). In some embodiments, the event also includes information for one or more associated event handlers 290.

In some embodiments, event definition 287 includes a definition of an event for a respective user-interface object. In some embodiments, event comparator 284 performs a hit test to determine which user-interface object is associated with a sub-event. For example, in an application view in which three user-interface objects are displayed on touch-sensitive display 212, when a touch is detected on touch-sensitive display 212, event comparator 284 performs a hit test to determine which of the three user-interface objects is associated with the touch (sub-event). If each displayed object is associated with a respective event handler 290, the event comparator uses the result of the hit test to determine which event handler 290 should be activated. For example, event comparator 284 selects an event handler associated with the sub-event and the object triggering the hit test.

In some embodiments, the definition for a respective event (287) also includes delayed actions that delay delivery of the event information until after it has been determined whether the sequence of sub-events does or does not correspond to the event recognizer's event type.

When a respective event recognizer 280 determines that the series of sub-events do not match any of the events in event definitions 286, the respective event recognizer 280 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 280 includes metadata 283 with configurable properties, flags, and/or lists that indicate how the event delivery system should perform sub-event delivery to actively involved event recognizers. In some embodiments, metadata 283 includes configurable properties, flags, and/or lists that indicate how event recognizers interact, or are enabled to interact, with one another. In some embodiments, metadata 283 includes configurable properties, flags, and/or lists that indicate whether sub-events are delivered to varying levels in the view or programmatic hierarchy.

In some embodiments, a respective event recognizer 280 activates event handler 290 associated with an event when one or more particular sub-events of an event are recognized. In some embodiments, a respective event recognizer 280 delivers event information associated with the event to event handler 290. Activating an event handler 290 is distinct from sending (and deferred sending) sub-events to a respective hit view. In some embodiments, event recognizer 280 throws a flag associated with the recognized event, and event handler 290 associated with the flag catches the flag and performs a predefined process.

In some embodiments, event delivery instructions 288 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 276 creates and updates data used in application 236-1. For example, data updater 276 updates the telephone number used in contacts module 237, or stores a video file used in video player module. In some embodiments, object updater 277 creates and updates objects used in application 236-1. For example, object updater 277 creates a new user-interface object or updates the position of a user-interface object. GUI updater 278 updates the GUI. For example, GUI updater 278 prepares display information and sends it to graphics module 232 for display on a touch-sensitive display.

In some embodiments, event handler(s) 290 includes or has access to data updater 276, object updater 277, and GUI updater 278. In some embodiments, data updater 276, object updater 277, and GUI updater 278 are included in a single module of a respective application 236-1 or application view 291. In other embodiments, they are included in two or more software modules.

It shall be understood that the foregoing discussion regarding event handling of user touches on touch-sensitive displays also applies to other forms of user inputs to operate multifunction devices 200 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 3 illustrates a portable multifunction device 200 having a touch screen 212 in accordance with some embodiments. The touch screen optionally displays one or more graphics within user interface (UI) 300. In this embodiment, as well as others described below, a user is enabled to select one or more of the graphics by making a gesture on the graphics, for example, with one or more fingers 302 (not drawn to scale in the figure) or one or more styluses 303 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 200. In some implementations or circumstances, inadvertent contact with a graphic does not select the graphic. For example, a swipe gesture that sweeps over an application icon optionally does not select the corresponding application when the gesture corresponding to selection is a tap.

Device 200 also includes one or more physical buttons, such as "home" or menu button 304. As described previously, menu button 304 is used to navigate to any application 236 in a set of applications that is executed on device 200. Alternatively, in some embodiments, the menu button is implemented as a soft key in a GUI displayed on touch screen 212.

In one embodiment, device 200 includes touch screen 212, menu button 304, push button 306 for powering the device on/off and locking the device, volume adjustment button(s) 308, subscriber identity module (SIM) card slot 310, headset jack 312, and docking/charging external port 224. Push button 306 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 200 also accepts verbal input for activation or deactivation of some functions through microphone 213. Device 200 also, optionally, includes one or more contact intensity sensors 265 for detecting intensity of contacts on touch screen 212 and/or one or more tactile output generators 267 for generating tactile outputs for a user of device 200.

FIG. 4 is a block diagram of an exemplary multifunction device with a display and a touch-sensitive surface in accordance with some embodiments. Device 400 need not be portable. In some embodiments, device 400 is a laptop computer, a desktop computer, a tablet computer, a multimedia player device, a navigation device, an educational device (such as a child's learning toy), a gaming system, or a control device (e.g., a home or industrial controller). Device 400 typically includes one or more processing units (CPUs) 410, one or more network or other communications interfaces 460, memory 470, and one or more communication buses 420 for interconnecting these components. Communication buses 420 optionally include circuitry (sometimes called a chipset) that interconnects and controls communications between system components. Device 400 includes input/output (I/O) interface 430 comprising display 440, which is typically a touch screen display. I/O interface 430 also optionally includes a keyboard and/or mouse (or other pointing device) 450 and touchpad 455, tactile output generator 457 for generating tactile outputs on device 400 (e.g., similar to tactile output generator(s) 267 described above with reference to FIG. 2A), sensors 459 (e.g., optical, acceleration, proximity, touch-sensitive, and/or contact intensity sensors similar to contact intensity sensor(s) 265 described above with reference to FIG. 2A). Memory 470 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 470 optionally includes one or more storage devices remotely located from CPU(s) 410. In some embodiments, memory 470 stores programs, modules, and data structures analogous to the programs, modules, and data structures stored in memory 202 of portable multifunction device 200 (FIG. 2A), or a subset thereof. Furthermore, memory 470 optionally stores additional programs, modules, and data structures not present in memory 202 of portable multifunction device 200. For example, memory 470 of device 400 optionally stores drawing module 480, presentation module 482, word processing module 484, website creation module 486, disk authoring module 488, and/or spreadsheet module 490, while memory 202 of portable multifunction device 200 (FIG. 2A) optionally does not store these modules.

Each of the above-identified elements in FIG. 4 is, in some examples, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are combined or otherwise rearranged in various embodiments. In some embodiments, memory 470 stores a subset of the modules and data structures identified above. Furthermore, memory 470 stores additional modules and data structures not described above.

Attention is now directed towards embodiments of user interfaces that can be implemented on, for example, portable multifunction device 200.

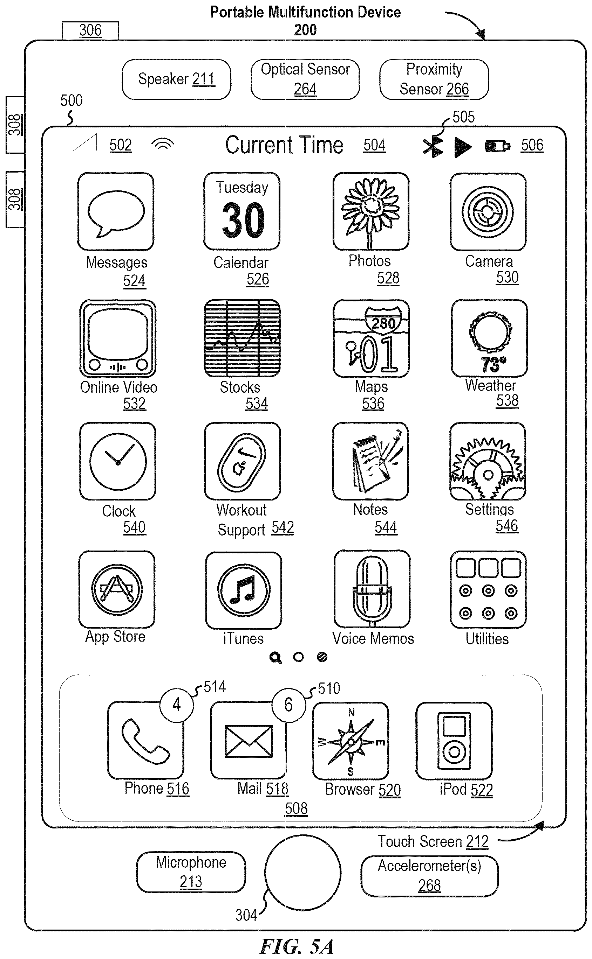

FIG. 5A illustrates an exemplary user interface for a menu of applications on portable multifunction device 200 in accordance with some embodiments. Similar user interfaces are implemented on device 400. In some embodiments, user interface 500 includes the following elements, or a subset or superset thereof:

Signal strength indicator(s) 502 for wireless communication(s), such as cellular and Wi-Fi signals;
- Time 504;
- Bluetooth indicator 505;
- Battery status indicator 506;
- Tray 508 with icons for frequently used applications, such as:
   ∘ Icon 516 for telephone module 238, labeled "Phone," which optionally includes an indicator 514 of the number of missed calls or voicemail messages;
   ∘ Icon 518 for e-mail client module 240, labeled "Mail," which optionally includes an indicator 510 of the number of unread e-mails;
   ∘ Icon 520 for browser module 247, labeled "Browser;" and
   ∘ Icon 522 for video and music player module 252, also referred to as iPod (trademark of Apple Inc.) module 252, labeled "iPod;" and
- Icons for other applications, such as:
   ∘ Icon 524 for IM module 241, labeled "Messages;"
   ∘ Icon 526 for calendar module 248, labeled "Calendar;"
   ∘ Icon 528 for image management module 244, labeled "Photos;"
   ∘ Icon 530 for camera module 243, labeled "Camera;"
   ∘ Icon 532 for online video module 255, labeled "Online Video;"
   ∘ Icon 534 for stocks widget 249-2, labeled "Stocks;"
   ∘ Icon 536 for map module 254, labeled "Maps;"
   ∘ Icon 538 for weather widget 249-1, labeled "Weather;"
   ∘ Icon 540 for alarm clock widget 249-4, labeled "Clock;"
   ∘ Icon 542 for workout support module 242, labeled "Workout Support;"
   ∘ Icon 544 for notes module 253, labeled "Notes;" and
   ∘ Icon 546 for a settings application or module, labeled "Settings," which provides access to settings for device 200 and its various applications 236.

It should be noted that the icon labels illustrated in FIG. 5A are merely exemplary. For example, icon 522 for video and music player module 252 is optionally labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

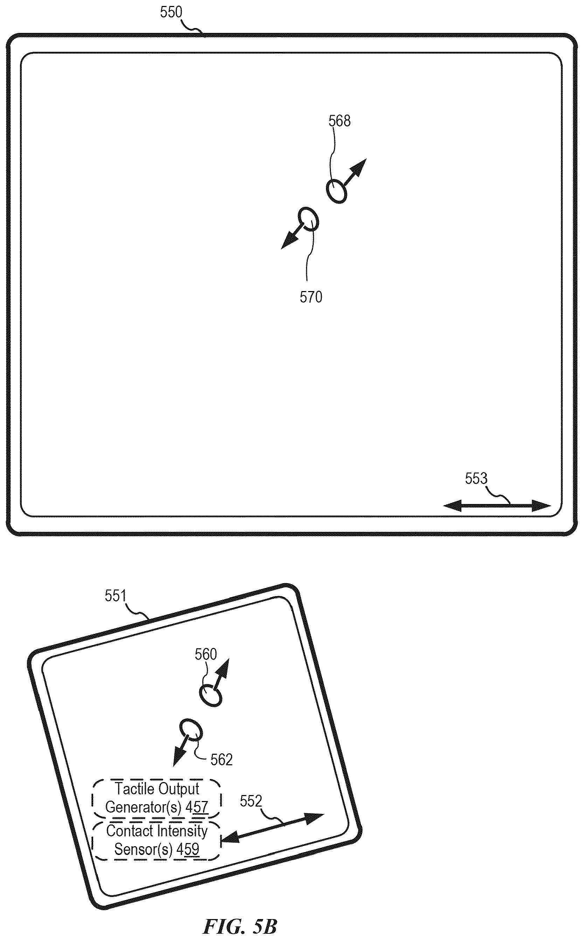

FIG. 5B illustrates an exemplary user interface on a device (e.g., device 400, FIG. 4) with a touch-sensitive surface 551 (e.g., a tablet or touchpad 455, FIG. 4) that is separate from the display 550 (e.g., touch screen display 212). Device 400 also, optionally, includes one or more contact intensity sensors (e.g., one or more of sensors 457) for detecting intensity of contacts on touch-sensitive surface 551 and/or one or more tactile output generators 459 for generating tactile outputs for a user of device 400.

Although some of the examples which follow will be given with reference to inputs on touch screen display 212 (where the touch-sensitive surface and the display are combined), in some embodiments, the device detects inputs on a touch-sensitive surface that is separate from the display, as shown in FIG. 5B. In some embodiments, the touch-sensitive surface (e.g., 551 in FIG. 5B) has a primary axis (e.g., 552 in FIG. 5B) that corresponds to a primary axis (e.g., 553 in FIG. 5B) on the display (e.g., 550). In accordance with these embodiments, the device detects contacts (e.g., 560 and 562 in FIG. 5B) with the touch-sensitive surface 551 at locations that correspond to respective locations on the display (e.g., in FIG. 5B, 560 corresponds to 568 and 562 corresponds to 570). In this way, user inputs (e.g., contacts 560 and 562, and movements thereof) detected by the device on the touch-sensitive surface (e.g., 551 in FIG. 5B) are used by the device to manipulate the user interface on the display (e.g., 550 in FIG. 5B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

FIG. 6A illustrates exemplary personal electronic device 600. Device 600 includes body 602. In some embodiments, device 600 includes some or all of the features described with respect to devices 200 and 400 (e.g., FIGS. 2A-4). In some embodiments, device 600 has touch-sensitive display screen 604, hereafter touch screen 604. Alternatively, or in addition to touch screen 604, device 600 has a display and a touch-sensitive surface. As with devices 200 and 400, in some embodiments, touch screen 604 (or the touch-sensitive surface) has one or more intensity sensors for detecting intensity of contacts (e.g., touches) being applied. The one or more intensity sensors of touch screen 604 (or the touch-sensitive surface) provide output data that represents the intensity of touches. The user interface of device 600 responds to touches based on their intensity, meaning that touches of different intensities can invoke different user interface operations on device 600.

Techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, and International Patent Application Serial No. PCT/US2013/069483, titled "Device, Method, and Graphical User Interface for Transitioning Between Touch Input to Display Output Relationships," filed November 11, 2013.

In some embodiments, device 600 has one or more input mechanisms 606 and 608. Input mechanisms 606 and 608, if included, are physical. Examples of physical input mechanisms include push buttons and rotatable mechanisms. In some embodiments, device 600 has one or more attachment mechanisms. Such attachment mechanisms, if included, can permit attachment of device 600 with, for example, hats, eyewear, earrings, necklaces, shirts, jackets, bracelets, watch straps, chains, trousers, belts, shoes, purses, backpacks, and so forth. These attachment mechanisms permit device 600 to be worn by a user.

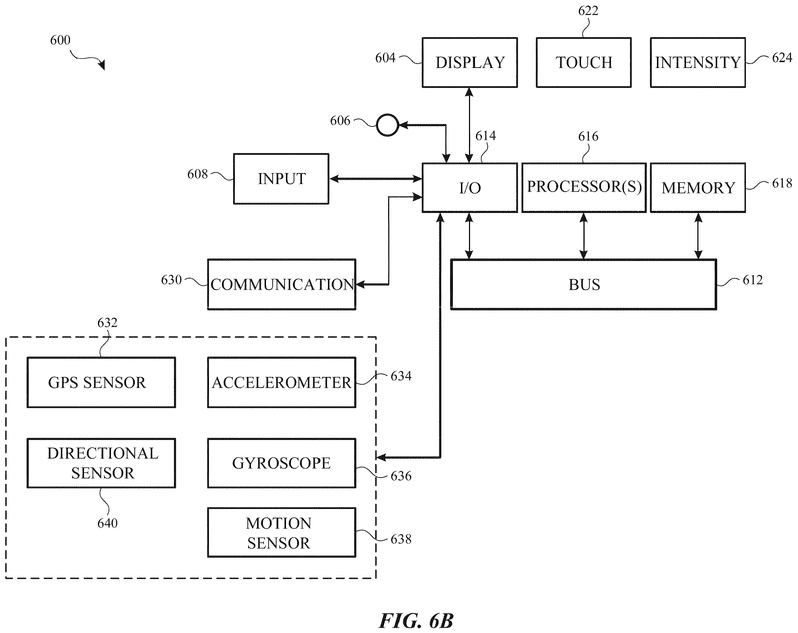

FIG. 6B depicts exemplary personal electronic device 600. In some embodiments, device 600 includes some or all of the components described with respect to FIGS. 2A, 2B, and 4. Device 600 has bus 612 that operatively couples I/O section 614 with one or more computer processors 616 and memory 618. I/O section 614 is connected to display 604, which can have touch-sensitive component 622 and, optionally, touch-intensity sensitive component 624. In addition, I/O section 614 is connected with communication unit 630 for receiving application and operating system data, using Wi-Fi, Bluetooth, near field communication (NFC), cellular, and/or other wireless communication techniques. Device 600 includes input mechanisms 606 and/or 608. Input mechanism 606 is a rotatable input device or a depressible and rotatable input device, for example. Input mechanism 608 is a button, in some examples.

Input mechanism 608 is a microphone, in some examples. Personal electronic device 600 includes, for example, various sensors, such as GPS sensor 632, accelerometer 634, directional sensor 640 (e.g., compass), gyroscope 636, motion sensor 638, and/or a combination thereof, all of which are operatively connected to I/O section 614.

Memory 618 of personal electronic device 600 is a non-transitory computer-readable storage medium, for storing computer-executable instructions, which, when executed by one or more computer processors 616, for example, cause the computer processors to perform the techniques and processes described below. The computer-executable instructions, for example, are also stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. Personal electronic device 600 is not limited to the components and configuration of FIG. 6B, but can include other or additional components in multiple configurations.

As used here, the term "affordance" refers to a user-interactive graphical user interface object that is, for example, displayed on the display screen of devices 200, 400, and/or 600 (FIGS. 2A, 4, and 6A-6B). For example, an image (e.g., icon), a button, and text (e.g., hyperlink) each constitutes an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 455 in FIG. 4 or touch-sensitive surface 551 in FIG. 5B) while the cursor is over a particular user interface element (e.g., a button, window, slider or other user interface element), the particular user interface element is adjusted in accordance with the detected input. In some implementations that include a touch screen display (e.g., touch-sensitive display system 212 in FIG. 2A or touch screen 212 in FIG. 5A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation) rather than being used to determine whether to perform a first operation or a second operation.

In some embodiments, a portion of a gesture is identified for purposes of determining a characteristic intensity. For example, a touch-sensitive surface receives a continuous swipe contact transitioning from a start location and reaching an end location, at which point the intensity of the contact increases. In this example, the characteristic intensity of the contact at the end location is based on only a portion of the continuous swipe contact, and not the entire swipe contact (e.g., only the portion of the swipe contact at the end location). In some embodiments, a smoothing algorithm is applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

### 3. Digital Assistant System

FIG. 7A illustrates a block diagram of digital assistant system 700 in accordance with various examples. In some examples, digital assistant system 700 is implemented on a standalone computer system. In some examples, digital assistant system 700 is distributed across multiple computers. In some examples, some of the modules and functions of the digital assistant are divided into a server portion and a client portion, where the client portion resides on one or more user devices (e.g., devices 104, 122, 200, 400, or 600) and communicates with the server portion (e.g., server system 108) through one or more networks, e.g., as shown in FIG. 1. In some examples, digital assistant system 700 is an implementation of server system 108 (and/or DA server 106) shown in FIG. 1. It should be noted that digital assistant system 700 is only one example of a digital assistant system, and that digital assistant system 700 can have more or fewer components than shown, can combine two or more components, or can have a different configuration or arrangement of the components. The various components shown in FIG. 7A are implemented in hardware, software instructions for execution by one or more processors, firmware, including one or more signal processing and/or application specific integrated circuits, or a combination thereof.

Digital assistant system 700 includes memory 702, one or more processors 704, input/output (I/O) interface 706, and network communications interface 708. These components can communicate with one another over one or more communication buses or signal lines 710.

In some examples, memory 702 includes a non-transitory computer-readable medium, such as high-speed random access memory and/or a non-volatile computer-readable storage medium (e.g., one or more magnetic disk storage devices, flash memory devices, or other non-volatile solid-state memory devices).

In some examples, I/O interface 706 couples input/output devices 716 of digital assistant system 700, such as displays, keyboards, touch screens, and microphones, to user interface module 722. I/O interface 706, in conjunction with user interface module 722, receives user inputs (e.g., voice input, keyboard inputs, touch inputs, etc.) and processes them accordingly. In some examples, e.g., when the digital assistant is implemented on a standalone user device, digital assistant system 700 includes any of the components and I/O communication interfaces described with respect to devices 200, 400, or 600 in FIGs. 2A, 4, 6A, respectively. In some examples, digital assistant system 700 represents the server portion of a digital assistant implementation, and can interact with the user through a client-side portion residing on a user device (e.g., devices 104, 200, 400, or 600).

In some examples, the network communications interface 708 includes wired communication port(s) 712 and/or wireless transmission and reception circuitry 714. The wired communication port(s) receives and send communication signals via one or more wired interfaces, e.g., Ethernet, Universal Serial Bus (USB), FIREWIRE, etc. The wireless circuitry 714 receives and sends RF signals and/or optical signals from/to communications networks and other communications devices. The wireless communications use any of a plurality of communications standards, protocols, and technologies, such as GSM, EDGE, CDMA, TDMA, Bluetooth, Wi-Fi, VoIP, Wi-MAX, or any other suitable communication protocol. Network communications interface 708 enables communication between digital assistant system 700 with networks, such as the Internet, an intranet, and/or a wireless network, such as a cellular telephone network, a wireless local area network (LAN), and/or a metropolitan area network (MAN), and other devices.

In some examples, memory 702, or the computer-readable storage media of memory 702, stores programs, modules, instructions, and data structures including all or a subset of: operating system 718, communications module 720, user interface module 722, one or more applications 724, and digital assistant module 726. In particular, memory 702, or the computer-readable storage media of memory 702, stores instructions for performing the processes described below. One or more processors 704 execute these programs, modules, and instructions, and reads/writes from/to the data structures.

Operating system 718 (e.g., Darwin, RTXC, LINUX, UNIX, iOS, OS X, WINDOWS, or an embedded operating system such as VxWorks) includes various software components and/or drivers for controlling and managing general system tasks (e.g., memory management, storage device control, power management, etc.) and facilitates communications between various hardware, firmware, and software components.

Communications module 720 facilitates communications between digital assistant system 700 with other devices over network communications interface 708. For example, communications module 720 communicates with RF circuitry 208 of electronic devices such as devices 200, 400, and 600 shown in FIGS. 2A, 4, 6A-6B, respectively. Communications module 720 also includes various components for handling data received by wireless circuitry 714 and/or wired communications port 712.

User interface module 722 receives commands and/or inputs from a user via I/O interface 706 (e.g., from a keyboard, touch screen, pointing device, controller, and/or microphone), and generate user interface objects on a display. User interface module 722 also prepares and delivers outputs (e.g., speech, sound, animation, text, icons, vibrations, haptic feedback, light, etc.) to the user via the I/O interface 706 (e.g., through displays, audio channels, speakers, touch-pads, etc.).

Applications 724 include programs and/or modules that are configured to be executed by one or more processors 704. For example, if the digital assistant system is implemented on a standalone user device, applications 724 include user applications, such as games, a calendar application, a navigation application, or an email application. If digital assistant system 700 is implemented on a server, applications 724 include resource management applications, diagnostic applications, or scheduling applications, for example.

Memory 702 also stores digital assistant module 726 (or the server portion of a digital assistant). In some examples, digital assistant module 726 includes the following sub-modules, or a subset or superset thereof: input/output processing module 728, speech-to-text (STT) processing module 730, natural language processing module 732, dialogue flow processing module 734, task flow processing module 736, service processing module 738, and speech synthesis processing module 740. Each of these modules has access to one or more of the following systems or data and models of the digital assistant module 726, or a subset or superset thereof: ontology 760, vocabulary index 744, user data 748, task flow models 754, service models 756, and ASR systems 758.

In some examples, using the processing modules, data, and models implemented in digital assistant module 726, the digital assistant can perform at least some of the following: converting speech input into text; identifying a user's intent expressed in a natural language input received from the user; actively eliciting and obtaining information needed to fully infer the user's intent (e.g., by disambiguating words, games, intentions, etc.); determining the task flow for fulfilling the inferred intent; and executing the task flow to fulfill the inferred intent.

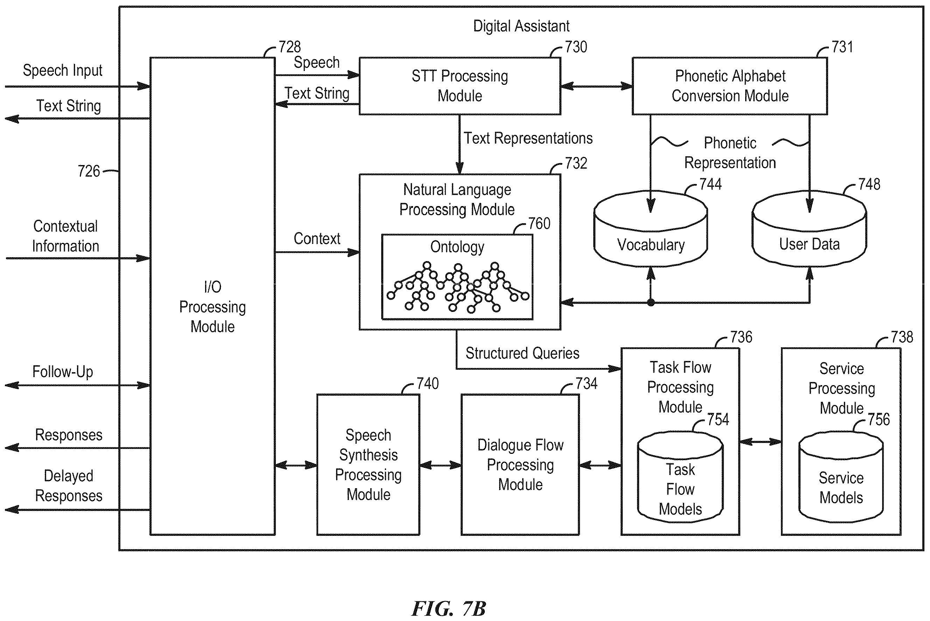

In some examples, as shown in FIG. 7B, I/O processing module 728 interacts with the user through I/O devices 716 in FIG. 7A or with a user device (e.g., devices 104, 200, 400, or 600) through network communications interface 708 in FIG. 7A to obtain user input (e.g., a speech input) and to provide responses (e.g., as speech outputs) to the user input. I/O processing module 728 optionally obtains contextual information associated with the user input from the user device, along with or shortly after the receipt of the user input. The contextual information includes user-specific data, vocabulary, and/or preferences relevant to the user input. In some examples, the contextual information also includes software and hardware states of the user device at the time the user request is received, and/or information related to the surrounding environment of the user at the time that the user request was received. In some examples, I/O processing module 728 also sends follow-up questions to, and receive answers from, the user regarding the user request. When a user request is received by I/O processing module 728 and the user request includes speech input, I/O processing module 728 forwards the speech input to STT processing module 730 (or speech recognizer) for speech-to-text conversions.

STT processing module 730 includes one or more ASR systems 758. The one or more ASR systems 758 can process the speech input that is received through I/O processing module 728 to produce a recognition result. Each ASR system 758 includes a front-end speech pre-processor. The front-end speech pre-processor extracts representative features from the speech input. For example, the front-end speech pre-processor performs a Fourier transform on the speech input to extract spectral features that characterize the speech input as a sequence of representative multi-dimensional vectors. Further, each ASR system 758 includes one or more speech recognition models (e.g., acoustic models and/or language models) and implements one or more speech recognition engines. Examples of speech recognition models include Hidden Markov Models, Gaussian-Mixture Models, Deep Neural Network Models, n-gram language models, and other statistical models. Examples of speech recognition engines include the dynamic time warping based engines and weighted finite-state transducers (WFST) based engines. The one or more speech recognition models and the one or more speech recognition engines are used to process the extracted representative features of the front-end speech pre-processor to produce intermediate recognitions results (e.g., phonemes, phonemic strings, and sub-words), and ultimately, text recognition results (e.g., words, word strings, or sequence of tokens). In some examples, the speech input is processed at least partially by a third-party service or on the user's device (e.g., device 104, 200, 400, or 600) to produce the recognition result. Once STT processing module 730 produces recognition results containing a text string (e.g., words, or sequence of words, or sequence of tokens), the recognition result is passed to natural language processing module 732 for intent deduction. In some examples, STT processing module 730 produces multiple candidate text representations of the speech input. Each candidate text representation is a sequence of words or tokens corresponding to the speech input. In some examples, each candidate text representation is associated with a speech recognition confidence score. Based on the speech recognition confidence scores, STT processing module 730 ranks the candidate text representations and provides the n-best (e.g., n highest ranked) candidate text representation(s) to natural language processing module 732 for intent deduction, where n is a predetermined integer greater than zero. For example, in one example, only the highest ranked (n=1) candidate text representation is passed to natural language processing module 732 for intent deduction. In another example, the five highest ranked (n=5) candidate text representations are passed to natural language processing module 732 for intent deduction.

More details on the speech-to-text processing are described in U.S. Utility Application Serial No. 13/236,942 for "Consolidating Speech Recognition Results," filed on September 20, 2011.

In some examples, STT processing module 730 includes and/or accesses a vocabulary of recognizable words via phonetic alphabet conversion module 731. Each vocabulary word is associated with one or more candidate pronunciations of the word represented in a speech recognition phonetic alphabet. In particular, the vocabulary of recognizable words includes a word that is associated with a plurality of candidate pronunciations. For example, the vocabulary includes the word "tomato" that is associated with the candidate pronunciations of / 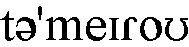 / and /ta'matou/. Further, vocabulary words are associated with custom candidate pronunciations that are based on previous speech inputs from the user. Such custom candidate pronunciations are stored in STT processing module 730 and are associated with a particular user via the user's profile on the device. In some examples, the candidate pronunciations for words are determined based on the spelling of the word and one or more linguistic and/or phonetic rules. In some examples, the candidate pronunciations are manually generated, e.g., based on known canonical pronunciations.

In some examples, the candidate pronunciations are ranked based on the commonness of the candidate pronunciation. For example, the candidate pronunciation / 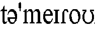 / is ranked higher than / 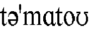 /, because the former is a more commonly used pronunciation (e.g., among all users, for users in a particular geographical region, or for any other appropriate subset of users). In some examples, candidate pronunciations are ranked based on whether the candidate pronunciation is a custom candidate pronunciation associated with the user. For example, custom candidate pronunciations are ranked higher than canonical candidate pronunciations. This can be useful for recognizing proper nouns having a unique pronunciation that deviates from canonical pronunciation. In some examples, candidate pronunciations are associated with one or more speech characteristics, such as geographic origin, nationality, or ethnicity. For example, the candidate pronunciation / 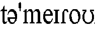 / is associated with the United States, whereas the candidate pronunciation /to'matou/ is associated with Great Britain. Further, the rank of the candidate pronunciation is based on one or more characteristics (e.g., geographic origin, nationality, ethnicity, etc.) of the user stored in the user's profile on the device. For example, it can be determined from the user's profile that the user is associated with the United States. Based on the user being associated with the United States, the candidate pronunciation / 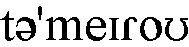 / (associated with the United States) is ranked higher than the candidate pronunciation / 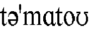 / (associated with Great Britain). In some examples, one of the ranked candidate pronunciations is selected as a predicted pronunciation (e.g., the most likely pronunciation).

When a speech input is received, STT processing module 730 is used to determine the phonemes corresponding to the speech input (e.g., using an acoustic model), and then attempt to determine words that match the phonemes (e.g., using a language model). For example, if STT processing module 730 first identifies the sequence of phonemes / 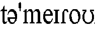 / corresponding to a portion of the speech input, it can then determine, based on vocabulary index 744, that this sequence corresponds to the word "tomato."

In some examples, STT processing module 730 uses approximate matching techniques to determine words in an utterance. Thus, for example, the STT processing module 730 determines that the sequence of phonemes / 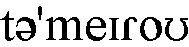 / corresponds to the word "tomato," even if that particular sequence of phonemes is not one of the candidate sequence of phonemes for that word.

Natural language processing module 732 ("natural language processor") of the digital assistant takes the n-best candidate text representation(s) ("word sequence(s)" or "token sequence(s)") generated by STT processing module 730, and attempts to associate each of the candidate text representations with one or more "actionable intents" recognized by the digital assistant. An "actionable intent" (or "user intent") represents a task that can be performed by the digital assistant, and can have an associated task flow implemented in task flow models 754. The associated task flow is a series of programmed actions and steps that the digital assistant takes in order to perform the task. The scope of a digital assistant's capabilities is dependent on the number and variety of task flows that have been implemented and stored in task flow models 754, or in other words, on the number and variety of "actionable intents" that the digital assistant recognizes. The effectiveness of the digital assistant, however, also dependents on the assistant's ability to infer the correct "actionable intent(s)" from the user request expressed in natural language.

In some examples, in addition to the sequence of words or tokens obtained from STT processing module 730, natural language processing module 732 also receives contextual information associated with the user request, e.g., from I/O processing module 728. The natural language processing module 732 optionally uses the contextual information to clarify, supplement, and/or further define the information contained in the candidate text representations received from STT processing module 730. The contextual information includes, for example, user preferences, hardware, and/or software states of the user device, sensor information collected before, during, or shortly after the user request, prior interactions (e.g., dialogue) between the digital assistant and the user, and the like. As described herein, contextual information is, in some examples, dynamic, and changes with time, location, content of the dialogue, and other factors.

In some examples, the natural language processing is based on, e.g., ontology 760. Ontology 760 is a hierarchical structure containing many nodes, each node representing either an "actionable intent" or a "property" relevant to one or more of the "actionable intents" or other "properties." As noted above, an "actionable intent" represents a task that the digital assistant is capable of performing, i.e., it is "actionable" or can be acted on. A "property" represents a parameter associated with an actionable intent or a sub-aspect of another property. A linkage between an actionable intent node and a property node in ontology 760 defines how a parameter represented by the property node pertains to the task represented by the actionable intent node.

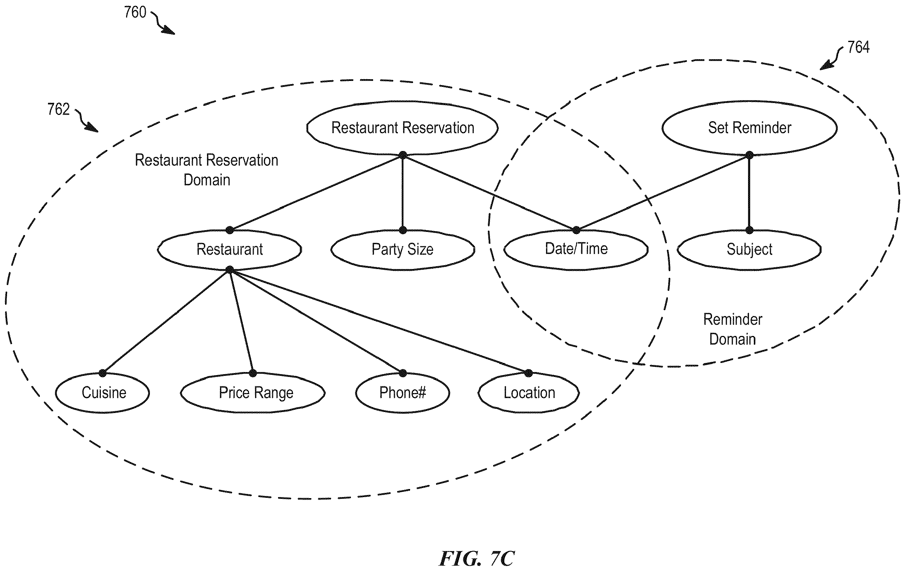

In some examples, ontology 760 is made up of actionable intent nodes and property nodes. Within ontology 760, each actionable intent node is linked to one or more property nodes either directly or through one or more intermediate property nodes. Similarly, each property node is linked to one or more actionable intent nodes either directly or through one or more intermediate property nodes. For example, as shown in FIG. 7C, ontology 760 includes a "restaurant reservation" node (i.e., an actionable intent node). Property nodes "restaurant," "date/time" (for the reservation), and "party size" are each directly linked to the actionable intent node (i.e., the "restaurant reservation" node).

In addition, property nodes "cuisine," "price range," "phone number," and "location" are sub-nodes of the property node "restaurant," and are each linked to the "restaurant reservation" node (i.e., the actionable intent node) through the intermediate property node "restaurant." For another example, as shown in FIG. 7C, ontology 760 also includes a "set reminder" node (i.e., another actionable intent node). Property nodes "date/time" (for setting the reminder) and "subject" (for the reminder) are each linked to the "set reminder" node. Since the property "date/time" is relevant to both the task of making a restaurant reservation and the task of setting a reminder, the property node "date/time" is linked to both the "restaurant reservation" node and the "set reminder" node in ontology 760.

An actionable intent node, along with its linked property nodes, is described as a "domain," which represents a particular concept. In the present discussion, each domain is associated with a respective actionable intent, and refers to the group of nodes (and the relationships there between) associated with the particular actionable intent. For example, ontology 760 shown in FIG. 7C includes an example of restaurant reservation domain 762 and an example of reminder domain 764 within ontology 760. Restaurant reservation domain 762 represents the concept of making a restaurant reservation. The restaurant reservation domain includes the actionable intent node "restaurant reservation," property nodes "restaurant," "date/time," and "party size," and sub-property nodes "cuisine," "price range," "phone number," and "location." Reminder domain 762 represents the concept of setting and providing reminders. Reminder domain 764 includes the actionable intent node "set reminder," and property nodes "subject" and "date/time." In some examples, ontology 760 is made up of many domains. Each domain shares one or more property nodes with one or more other domains. For example, the "date/time" property node is associated with many different domains (e.g., a scheduling domain, a travel reservation domain, a movie ticket domain, etc.), in addition to restaurant reservation domain 762 and reminder domain 764.

While FIG. 7C illustrates two example domains within ontology 760, other domains include, for example, "find a movie," "place a phone call," "find directions," "schedule a meeting," "send a message," and "provide an answer to a question," "read a list," "providing navigation instructions," "provide instructions for a task" and so on. A "send a message" domain is associated with a "send a message" actionable intent node, and further includes property nodes such as "recipient(s)," "message type," and "message body." The property node "recipient" is further defined, for example, by the sub-property nodes such as "recipient name" and "message address."

In some examples, ontology 760 includes all the domains (and hence actionable intents) that the digital assistant is capable of understanding and acting upon. In some examples, ontology 760 is modified, such as by adding or removing entire domains or nodes, or by modifying relationships between the nodes within the ontology 760.

In some examples, nodes associated with multiple related actionable intents are clustered under a "super domain" in ontology 760. For example, a "travel" super-domain includes a cluster of property nodes and actionable intent nodes related to travel. The actionable intent nodes related to travel includes "airline reservation," "hotel reservation," "car rental," "get directions," "find points of interest," and so on. The actionable intent nodes under the same super domain (e.g., the "travel" super domain) have many property nodes in common. For example, the actionable intent nodes for "airline reservation," "hotel reservation," "car rental," "get directions," and "find points of interest" share one or more of the property nodes "start location," "destination," "departure date/time," "arrival date/time," and "party size."

In some examples, each node in ontology 760 is associated with a set of words and/or phrases that are relevant to the property or actionable intent represented by the node. The respective set of words and/or phrases associated with each node are the so-called "vocabulary" associated with the node. The respective set of words and/or phrases associated with each node are stored in vocabulary index 744 in association with the property or actionable intent represented by the node. For example, returning to FIG. 7B, the vocabulary associated with the node for the property of "restaurant" includes words such as "food," "drinks," "cuisine," "hungry," "eat," "pizza," "fast food," "meal," and so on. For another example, the vocabulary associated with the node for the actionable intent of "initiate a phone call" includes words and phrases such as "call," "phone," "dial," "ring," "call this number," "make a call to," and so on. The vocabulary index 744 optionally includes words and phrases in different languages.

Natural language processing module 732 receives the candidate text representations (e.g., text string(s) or token sequence(s)) from STT processing module 730, and for each candidate representation, determines what nodes are implicated by the words in the candidate text representation. In some examples, if a word or phrase in the candidate text representation is found to be associated with one or more nodes in ontology 760 (via vocabulary index 744), the word or phrase "triggers" or "activates" those nodes. Based on the quantity and/or relative importance of the activated nodes, natural language processing module 732 selects one of the actionable intents as the task that the user intended the digital assistant to perform. In some examples, the domain that has the most "triggered" nodes is selected. In some examples, the domain having the highest confidence value (e.g., based on the relative importance of its various triggered nodes) is selected. In some examples, the domain is selected based on a combination of the number and the importance of the triggered nodes. In some examples, additional factors are considered in selecting the node as well, such as whether the digital assistant has previously correctly interpreted a similar request from a user.

User data 748 includes user-specific information, such as user-specific vocabulary, user preferences, user address, user's default and secondary languages, user's contact list, and other short-term or long-term information for each user. In some examples, natural language processing module 732 uses the user-specific information to supplement the information contained in the user input to further define the user intent. For example, for a user request "invite my friends to my birthday party," natural language processing module 732 is able to access user data 748 to determine who the "friends" are and when and where the "birthday party" would be held, rather than requiring the user to provide such information explicitly in his/her request.

It should be recognized that in some examples, natural language processing module 732 is implemented using one or more machine learning mechanisms (e.g., neural networks). In particular, the one or more machine learning mechanisms are configured to receive a candidate text representation and contextual information associated with the candidate text representation. Based on the candidate text representation and the associated contextual information, the one or more machine learning mechanisms are configured to determine intent confidence scores over a set of candidate actionable intents. Natural language processing module 732 can select one or more candidate actionable intents from the set of candidate actionable intents based on the determined intent confidence scores. In some examples, an ontology (e.g., ontology 760) is also used to select the one or more candidate actionable intents from the set of candidate actionable intents.

Other details of searching an ontology based on a token string are described in U.S. Utility Application Serial No. 12/341,743 for "Method and Apparatus for Searching Using An Active Ontology," filed December 22, 2008.

In some examples, once natural language processing module 732 identifies an actionable intent (or domain) based on the user request, natural language processing module 732 generates a structured query to represent the identified actionable intent. In some examples, the structured query includes parameters for one or more nodes within the domain for the actionable intent, and at least some of the parameters are populated with the specific information and requirements specified in the user request. For example, the user says "Make me a dinner reservation at a sushi place at 7." In this case, natural language processing module 732 is able to correctly identify the actionable intent to be "restaurant reservation" based on the user input. According to the ontology, a structured query for a "restaurant reservation" domain includes parameters such as {Cuisine}, {Time}, {Date}, {Party Size}, and the like. In some examples, based on the speech input and the text derived from the speech input using STT processing module 730, natural language processing module 732 generates a partial structured query for the restaurant reservation domain, where the partial structured query includes the parameters {Cuisine = "Sushi"} and {Time = "7pm"}. However, in this example, the user's utterance contains insufficient information to complete the structured query associated with the domain. Therefore, other necessary parameters such as {Party Size} and {Date} are not specified in the structured query based on the information currently available. In some examples, natural language processing module 732 populates some parameters of the structured query with received contextual information. For example, in some examples, if the user requested a sushi restaurant "near me," natural language processing module 732 populates a {location} parameter in the structured query with GPS coordinates from the user device.

In some examples, natural language processing module 732 identifies multiple candidate actionable intents for each candidate text representation received from STT processing module 730. Further, in some examples, a respective structured query (partial or complete) is generated for each identified candidate actionable intent. Natural language processing module 732 determines an intent confidence score for each candidate actionable intent and ranks the candidate actionable intents based on the intent confidence scores. In some examples, natural language processing module 732 passes the generated structured query (or queries), including any completed parameters, to task flow processing module 736 ("task flow processor"). In some examples, the structured query (or queries) for the m-best (e.g., m highest ranked) candidate actionable intents are provided to task flow processing module 736, where m is a predetermined integer greater than zero. In some examples, the structured query (or queries) for the m-best candidate actionable intents are provided to task flow processing module 736 with the corresponding candidate text representation(s).

Other details of inferring a user intent based on multiple candidate actionable intents determined from multiple candidate text representations of a speech input are described in U.S. Utility Application Serial No. 14/298,725 for "System and Method for Inferring User Intent From Speech Inputs," filed June 6, 2014.

Task flow processing module 736 is configured to receive the structured query (or queries) from natural language processing module 732, complete the structured query, if necessary, and perform the actions required to "complete" the user's ultimate request. In some examples, the various procedures necessary to complete these tasks are provided in task flow models 754. In some examples, task flow models 754 include procedures for obtaining additional information from the user and task flows for performing actions associated with the actionable intent.

As described above, in order to complete a structured query, task flow processing module 736 needs to initiate additional dialogue with the user in order to obtain additional information, and/or disambiguate potentially ambiguous utterances. When such interactions are necessary, task flow processing module 736 invokes dialogue flow processing module 734 to engage in a dialogue with the user. In some examples, dialogue flow processing module 734 determines how (and/or when) to ask the user for the additional information and receives and processes the user responses. The questions are provided to and answers are received from the users through I/O processing module 728. In some examples, dialogue flow processing module 734 presents dialogue output to the user via audio and/or visual output, and receives input from the user via spoken or physical (e.g., clicking) responses. Continuing with the example above, when task flow processing module 736 invokes dialogue flow processing module 734 to determine the "party size" and "date" information for the structured query associated with the domain "restaurant reservation," dialogue flow processing module 734 generates questions such as "For how many people?" and "On which day?" to pass to the user. Once answers are received from the user, dialogue flow processing module 734 then populates the structured query with the missing information, or pass the information to task flow processing module 736 to complete the missing information from the structured query.

Once task flow processing module 736 has completed the structured query for an actionable intent, task flow processing module 736 proceeds to perform the ultimate task associated with the actionable intent. Accordingly, task flow processing module 736 executes the steps and instructions in the task flow model according to the specific parameters contained in the structured query. For example, the task flow model for the actionable intent of "restaurant reservation" includes steps and instructions for contacting a restaurant and actually requesting a reservation for a particular party size at a particular time. For example, using a structured query such as: {restaurant reservation, restaurant = ABC Café, date = 3/12/2012, time = 7pm, party size = 5}, task flow processing module 736 performs the steps of: (1) logging onto a server of the ABC Café or a restaurant reservation system such as OPENTABLE^{®}, (2) entering the date, time, and party size information in a form on the website, (3) submitting the form, and (4) making a calendar entry for the reservation in the user's calendar.

In some examples, task flow processing module 736 employs the assistance of service processing module 738 ("service processing module") to complete a task requested in the user input or to provide an informational answer requested in the user input. For example, service processing module 738 acts on behalf of task flow processing module 736 to make a phone call, set a calendar entry, invoke a map search, invoke or interact with other user applications installed on the user device, and invoke or interact with third-party services (e.g., a restaurant reservation portal, a social networking website, a banking portal, etc.). In some examples, the protocols and application programming interfaces (API) required by each service are specified by a respective service model among service models 756. Service processing module 738 accesses the appropriate service model for a service and generates requests for the service in accordance with the protocols and APIs required by the service according to the service model.

For example, if a restaurant has enabled an online reservation service, the restaurant submits a service model specifying the necessary parameters for making a reservation and the APIs for communicating the values of the necessary parameter to the online reservation service. When requested by task flow processing module 736, service processing module 738 establishes a network connection with the online reservation service using the web address stored in the service model, and sends the necessary parameters of the reservation (e.g., time, date, party size) to the online reservation interface in a format according to the API of the online reservation service.

In some examples, natural language processing module 732, dialogue flow processing module 734, and task flow processing module 736 are used collectively and iteratively to infer and define the user's intent, obtain information to further clarify and refine the user intent, and finally generate a response (i.e., an output to the user, or the completion of a task) to fulfill the user's intent. The generated response is a dialogue response to the speech input that at least partially fulfills the user's intent. Further, in some examples, the generated response is output as a speech output. In these examples, the generated response is sent to speech synthesis processing module 740 (e.g., speech synthesizer) where it can be processed to synthesize the dialogue response in speech form. In yet other examples, the generated response is data content relevant to satisfying a user request in the speech input.

In examples where task flow processing module 736 receives multiple structured queries from natural language processing module 732, task flow processing module 736 initially processes the first structured query of the received structured queries to attempt to complete the first structured query and/or execute one or more tasks or actions represented by the first structured query. In some examples, the first structured query corresponds to the highest ranked actionable intent. In other examples, the first structured query is selected from the received structured queries based on a combination of the corresponding speech recognition confidence scores and the corresponding intent confidence scores. In some examples, if task flow processing module 736 encounters an error during processing of the first structured query (e.g., due to an inability to determine a necessary parameter), the task flow processing module 736 can proceed to select and process a second structured query of the received structured queries that corresponds to a lower ranked actionable intent. The second structured query is selected, for example, based on the speech recognition confidence score of the corresponding candidate text representation, the intent confidence score of the corresponding candidate actionable intent, a missing necessary parameter in the first structured query, or any combination thereof.

Speech synthesis processing module 740 is configured to synthesize speech outputs for presentation to the user. Speech synthesis processing module 740 synthesizes speech outputs based on text provided by the digital assistant. For example, the generated dialogue response is in the form of a text string. Speech synthesis processing module 740 converts the text string to an audible speech output. Speech synthesis processing module 740 uses any appropriate speech synthesis technique in order to generate speech outputs from text, including, but not limited, to concatenative synthesis, unit selection synthesis, diphone synthesis, domain-specific synthesis, formant synthesis, articulatory synthesis, hidden Markov model (HMM) based synthesis, and sinewave synthesis. In some examples, speech synthesis processing module 740 is configured to synthesize individual words based on phonemic strings corresponding to the words. For example, a phonemic string is associated with a word in the generated dialogue response. The phonemic string is stored in metadata associated with the word. Speech synthesis processing module 740 is configured to directly process the phonemic string in the metadata to synthesize the word in speech form.

In some examples, instead of (or in addition to) using speech synthesis processing module 740, speech synthesis is performed on a remote device (e.g., the server system 108), and the synthesized speech is sent to the user device for output to the user. For example, this can occur in some implementations where outputs for a digital assistant are generated at a server system. And because server systems generally have more processing power or resources than a user device, it is possible to obtain higher quality speech outputs than would be practical with client-side synthesis.

Additional details on digital assistants can be found in the U.S. Utility Application No. 12/987,982, entitled "Intelligent Automated Assistant," filed January 10, 2011, and U.S. Utility Application No. 13/251,088, entitled "Generating and Processing Task Items That Represent Tasks to Perform," filed September 30, 2011.

As described above, ontology 760 can include any number of domains representing any number of actionable intents. For instance, in some examples, ontology 760 includes a "telephony" super domain representing concepts related to telephone functions. The "telephony" super domain includes, for example, a plurality of actionable intent nodes representing corresponding actionable intents. The actionable intents, for example, correspond to respective functions of a telephone application (e.g., implemented by telephone module 238).

In some examples, the "telephony" super domain includes a "place a call" actionable intent node representing the actionable intent of placing a phone call. The "place a call" actionable intent node is linked to a property node representing the {phone number} parameter. The "place a call" actionable intent node corresponds to the task of placing a call to a phone number specified by the {phone number} parameter. In some examples, the "telephony" super domain further includes a "place emergency call" actionable intent node representing the actionable intent of placing an emergency call. The "place emergency call" actionable intent node corresponds to the tasks of connecting with a device having call functionality and causing the device to place a call to an emergency number of the current location (e.g., "911" for United States or "112" in United Kingdom).

In some examples, the "telephony" super domain includes an "answer call" actionable intent node representing the actionable intent of answering an incoming call. The "answer call" actionable intent node corresponds to the task of answering an incoming call.

In some examples, the "telephony" super domain includes a "terminate call" actionable intent node representing the actionable intent of terminating an active call. The "terminate call" actionable intent node corresponds to the task of terminating an active call of a device (e.g., hanging up).

In some examples, the "telephony" super domain includes a "transmit duel-tone multi-frequency (DTMF) tone" actionable intent node representing the actionable intent of transmitting DTMF tones on an active call. In some examples, the "transmit DTMF tone" actionable intent node is linked to a property node representing the {character key} parameter. The "transmit DTMF tone" actionable intent node corresponds to the task of generating and transmitting, on an active call, DTMF tones corresponding to the character key(s) specified by the {character key} parameter.

In some examples, the "telephony" super domain includes an "answer call" actionable intent node representing the actionable intent of answering an incoming call. The "answer call" actionable intent node corresponds to the task of answering an incoming call.

In some examples, the "telephony" super domain includes a "terminate call" actionable intent node representing the actionable intent of terminating an active call. The "terminate call" actionable intent node corresponds to the task of terminating an active call of a device (e.g., hanging up).

In some examples, the "telephony" super domain includes a "hold call" actionable intent node representing the actionable intent of holding an active call. The "hold call" actionable intent node corresponds to the task of placing an active call on hold.

In some examples, the "telephony" super domain includes a "transfer call" actionable intent node representing the actionable intent of transferring an active call. In some examples, the "transfer call" actionable intent node is linked to a property node representing the {call transfer number} parameter. The "transfer call" actionable intent node corresponds to the task of transferring an active call to a second device based on a phone number specified by the {call transfer number} parameter.

In some examples, the "telephony" super domain includes a "join call" actionable intent node representing the actionable intent of joining a second call to an existing active call. In some examples, the "join call" actionable intent node is linked to a property node representing the {call join number} parameter. The "join call" actionable intent node corresponds to the task of establishing a second active call with a second device (e.g., by answering an incoming call or dialing a phone number specified by the {call join number} parameter) and merging the second active call with the existing active call to establish a three-way call.

In some examples, the "telephony" super domain includes a "play voicemail" actionable intent node representing the actionable intent of playing recent voicemails. The "play voicemail" actionable intent node corresponds to the task of obtaining and playing the N most recent voicemails (where N is a predefined positive integer).

In some examples, the "telephony" super domain includes a "list missed calls" actionable intent node representing the actionable intent of presenting a list of recent missed calls. The "list missed calls" actionable intent node corresponds to the task of obtaining and presenting call information for the N most recent missed call (where N is a predefined positive integer).

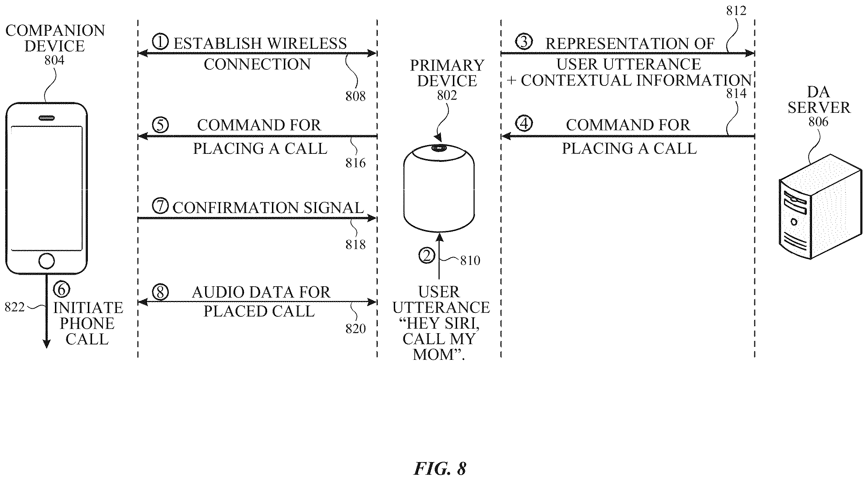

FIGS. 8-11 illustrate various techniques for using voice interaction at a primary device to access call functionality of a companion device, according to various examples. It should be recognized that, in some examples, the individual aspects described in FIGS. 8-11 can be combined in any manner.

FIG. 8 illustrates techniques for using voice interaction at primary device 802 to cause companion device 804 to place a call, according to various examples. Primary device 802 is similar or identical to device 122 of FIG. 1. Companion device 804 is similar or identical to device 102 of FIG. 1. For example, primary device 802 is a smart speaker device (e.g., without a display) and companion device 804 is a smart phone device. Some aspects of the present technique are performed using DA server 806, which is similar or identical to DA server 106 of FIG. 1. It should be recognized that, in other examples, any of the operations performed by DA server 806 can instead be performed locally at primary device 802 and/or companion device 804. For example, the respective DA client modules (e.g., DA client module 229) of primary device 802 and/or companion device 804 can perform the operations of DA server 806.

As represented by arrow 808, a wireless communication connection is initially established between primary device 802 and companion device 804. For example, when companion device 804 is positioned proximate to primary device 802, primary device 802 detects a wireless signal broadcasted by companion device 804, which initiates the exchange of authentication information between primary device 802 and companion device 804. Based on the exchanged authentication information, primary device 802 determines whether the companion device is a registered device of the primary device. If primary device 802 determines that companion device 804 is a registered device, a wireless communication connection is established between primary device 802 and companion device 804. In some examples, the established wireless communication connection is a single-hop, point-to-point wireless communication channel between primary device 802 and companion device 804. The wireless communication connection is established, for example, using a communication module (e.g., communication module 228) and RF circuitry (e.g., RF circuitry 208) of primary device 802.

In some examples, in accordance with establishing the wireless communication connection, companion device 804 provides primary device 802 with information, such as its device characteristics (e.g., device capabilities and functions) and operating state. For example, companion device 804 provides information indicating that it is a smartphone having telephony functions and that it is currently not engaged in a call. It should be recognized that, in some examples, primary device 802 can be communicatively coupled to several devices, each having different device characteristics. For example, wireless communication connections can be established between primary device 802 and other devices such as smart light switches, media players, smart thermostats, or the like. In some examples, primary device 802 is configured to control the functionalities of any one of the connected devices based on a received user utterance.

As represented by arrow 810, primary device 802 receives a user utterance (e.g., "Hey Siri, call my mom."). The user utterances is received, for example, at an I/O processing module (e.g., I/O processing module 728) via a microphone (e.g., microphone 213) of primary device 802. In the present example, the user utterance is received in conjunction with invoking a digital assistant on primary device 802. The digital assistant is invoked, for example, upon determining that a first portion of the user utterance contains a predefined spoken trigger (e.g., "Hey Siri,... "). Invoking the digital assistant causes primary device 802 to obtain audio data (e.g., via a microphone of primary device 802) containing a second portion of the user utterance (e.g., "...call my mom") and to automatically perform speech recognition (e.g., using STT processing module 730) and natural language processing (e.g., using natural language processing module 732) on the second portion of the user utterance. In other examples, the user utterance is received upon or after invoking the digital assistant on primary device 802. For example, the digital assistant is invoked in response to detecting a user input corresponding to a predetermined type (e.g., a button push). In this example, invoking the digital assistant causes primary device 802 to obtain audio data containing the user utterance and to automatically perform speech recognition and natural language processing on the user utterance.

Upon receiving the user utterance, primary device 802 sends a representation of the user utterance and contextual information to DA server 806 (as represented by arrow 812). The contextual information indicates, for example, that a wireless communication connection is established between primary device 802 and companion device 804 and that companion device 804 is a registered device of primary device 802. In some examples, the contextual information specifies an operating state of companion device 804. The operating state of the companion device 804 includes, for example, whether or not companion device 804 is currently engaged in an active call. In some examples, the contextual information specifies the type of device corresponding to primary device 802 and/or companion device 804. For example, the contextual information specifies that primary device 802 is a smart speaker device (e.g., without stand-alone telephony functions) and/or that companion device 804 is a smartphone device (e.g., having stand-alone telephony functions).

Upon receiving the representation of the user utterance and the contextual information, DA server 806 determines a user intent corresponding to the user utterance. In particular, DA server 806 performs automatic speech recognition processing (e.g., using STT processing module 730) on the user utterance to determine a text representation of the user utterance. DA server 806 then processes the text representation with the contextual information (e.g., using natural language processing module 732) to determine the user intent. For example, given the text representation of the second portion of the user utterance "call my mom," DA server 806 determines that the "telephony" super domain is most relevant to the user utterance. Within the "telephony" super domain, DA server 806 further determines that the "place a call" actionable intent node is most relevant to the user utterance. Based on this determination, DA server 806 determines that the user intent corresponding to the user utterance is to place a call. In some examples, DA server 806 resolves one or more parameters in the selected actionable intent node. For example, DA server 806 determines a value for the {phone number} parameter in the "place a call" actionable intent node by searching the user's contact information and obtaining the phone number corresponding to the contact alias "mom" specified in the user utterance.

In some examples, the contextual information is used by DA server 806 to disambiguate between several likely user intents. For example, based on the contextual information indicating that primary device 802 is a smart speaker having no display, DA server 806 can select the "place a call" actionable intent node in the "telephony" super domain as being most relevant to the user utterance over the "place a video call" actionable intent node in the "videotelephony" super domain. Thus, even if the user utterance is "place a video call to my mom," DA server 806 can determine that the "place a call" actionable intent node in the "telephony" super domain is most relevant to the user utterance because it recognizes based on the contextual information that primary device 802 is a smart speaker that cannot support a video call.

In accordance with the user intent corresponding to the actionable intent of placing a call, DA server 806 generates and sends a command to primary device 802 (represented by arrow 814). The command represents a task to satisfy the actionable intent of placing a call. In some examples, the command specifies the domain and parameter(s) corresponding to the determined user intent. For example, the command specifies the "place a call" actionable intent node of the "telephony" super domain and the resolved value for the {phone number} parameter. In some examples, the command does not specify which device is to execute the command, which enables DA server 806 to apply generally across a variety of devices.

Primary device 802 receives and analyzes the command from DA server 806 (e.g., using DA client module 229) and determines, based on a set of rules, which device is to execute the command. For example, primary device 802 is communicatively coupled to several devices (including companion device 804). Based on the command, primary device 802 determines whether the command is to be executed by itself or by one of the coupled devices. For example, based on the "place a call" actionable intent node and the "telephony" super domain specified in the command, primary device 802 determines that the command is to be executed by a device having telephony functions.

In accordance with determining that companion device 804 is a smartphone having telephony functions, primary device 802 sends instructions to companion device 804 (as represented by arrow 816) via the established wireless communication connection (e.g., using DA client module 229). The instructions cause companion device 804 to perform tasks that satisfy the user intent. In some examples, the instructions include the same command received by primary device 802 from DA service 806. In these examples, the command is forwarded to companion device 804 for execution. For example, upon receiving the command specifying the "place a call" actionable intent node of the "telephony" super domain and the resolved value for the {phone number} parameter, companion device 804 executes the task of placing a call to the phone number specified in the {phone number} parameter (e.g., using task flow processing module 736 and service processing module 738). In particular, companion device 804 initiates a telephone call to the specified phone number using a telephone application (e.g., implemented by telephone module 238) and attempts to establish a telephone connection with an external device corresponding to the specified phone number (represented by arrow 822).

In some examples, upon executing the command or attempting to execute the command, companion device 804 generates and sends a confirmation signal (represented by arrow 818) to primary device 802. The confirmation signal indicates, for example, the outcome of companion device 804 attempting to execute the command. For example, the confirmation signal can provide confirmation that the telephone call was successfully initiated. Alternatively, if execution of the command was unsuccessful, the confirmation signal can indicate the type of error that occurred. For example, the confirmation signal can include an error code indicating that there is unsatisfactory reception of cellular communication signals to initiate a cellular call or that companion device 804 is already engaged in a phone call.

In examples where the command to place a call is successfully executed, companion device 804 provides audio data (as represented by arrow 820) for the placed call to primary device 802 (e.g., using telephone module 238 and RF circuitry 208). The audio data is sent to primary device 802 via the previously established wireless communication channel and includes audio signals associated with placing the call (e.g., dial tones, dual-tone multi-frequency signaling for dialing the phone number, ringing tones, etc.). Primary device 802 receives the audio data and produces audio output (e.g., at a speaker of primary device 802) in accordance with the received audio data. Further, upon establishing a telephone connection, audio data of the established call is exchanged between companion device 804 and primary device 802 via the previously established wireless communication channel. For example, audio data representing speech received at a microphone of primary device 802 is sent to companion device 804, which transmits the audio data to the called party (e.g., via a cellular network). Similarly, audio data representing speech data received at companion device 804 from the called party are sent to primary device 802, which produces audio output corresponding to the audio data.

In examples where the confirmation signal includes an error code, primary device 802 processes the error code in conjunction with DA server 806 and provides a response to the user. For example, primary device 802 outputs dialogue informing the user of the type of error encountered. In some examples, the dialogue prompts the user whether to try placing the call again.

It should be appreciated that the techniques of FIG. 8 can include placing other types of phone calls or video calls. Particularly, in some examples, voice interaction at primary device 802 can be used to cause companion device 804 to place an emergency call. For example, the user utterance received at primary device 802 is "Hey Siri, call the police," or "Hey Siri, dial 911." A representation of the user utterance and associated contextual information is sent to DA server 806. Based on the user utterance and the contextual information, DA server 806 determines a user intent corresponding to the user utterance. For example, DA server 806 determines from the second portion of the user utterance (e.g., "call the police" or "dial 911") that the "place emergency call" actionable intent node in the "telephony" super domain is most relevant. Based on this determination, DA server 806 determines that the user intent is to place an emergency call. DA server 806 then sends a command to primary device 802. The command represents one or more tasks corresponding to the "place emergency call" actionable intent node. In some examples, based on the command, primary device 802 provides a spoken prompt requesting confirmation that the user wishes to place an emergency call. Upon receiving confirmation that the user wishes to place an emergency call, primary device 802 continues to process the command. In particular, primary device 802 determines whether a companion device (e.g., companion device 804) having stand-alone telephony functions is currently connected to primary device 802. Upon determining that companion device 804 having stand-alone telephony functions is connected to primary device 802, primary device 802 forwards the command to companion device 804, which causes companion device 804 to place an emergency call. Alternatively, if primary device 802 determines that a companion device having stand-alone telephony functions is not currently connected to primary device 802, primary device 802 attempts to connect with any surrounding compatible device having telephony functions. For example, primary device 802 broadcasts a signal, which when received by a surrounding compatible device having stand-alone telephony functions, causes the compatible device to establish a wireless connection with primary device 802. The compatible device need not be a registered device of primary device 802. Upon successfully establishing a wireless connection with the compatible device, primary device 802 sends instructions to the compatible device to cause the device to place an emergency call.

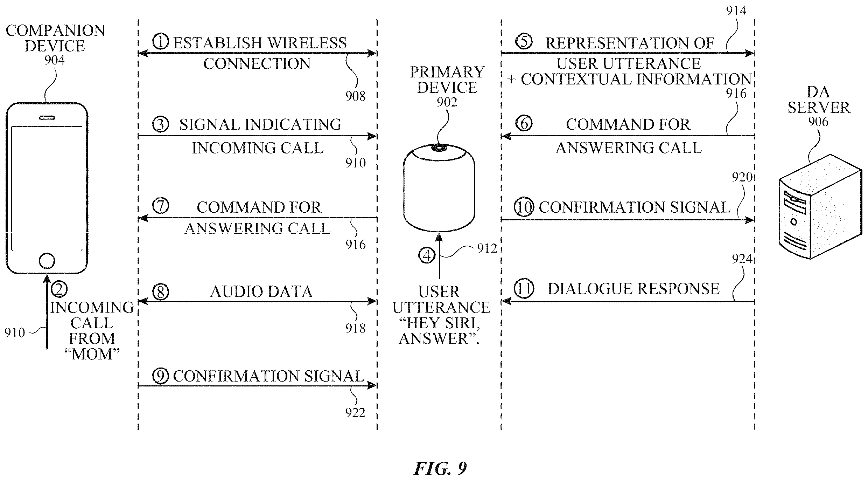

FIG. 9 illustrates techniques for using voice interaction at primary device 902 to cause companion device 904 to answer an incoming call, according to various examples. Primary device 902 and companion device 904 are similar or identical to primary device 802 and companion device 804, respectively. Some aspects of the present technique are performed using DA server 906, which is similar or identical to DA server 806. In some examples, any of these aspects can alternatively be performed locally at primary device 902 and/or companion device 904.

As represented by arrow 908, a wireless communication connection is initially established between primary device 902 and companion device 904. The wireless communication connection is established in a similar manner as described above in FIG. 8. In some examples, upon establishing the wireless communication connection, companion device 904 provides primary device 902 (via the established connection) with information, such as its device characteristics (e.g., device capabilities and functions) and operating state.

As represented by arrow 910, an incoming call is detected at companion device 904 (e.g., using telephone module 238 and RF circuitry 208). In some examples, the incoming call is a voice call received at companion device 904 via a telephone network (e.g., landline or cellular network). In some examples, the incoming call is a video call. In some examples, the incoming call is detected using a telecommunications application software (e.g., Facetime^{®} or Skype^{®}) operating on companion device 904.

In accordance with detecting the incoming call, companion device 904 sends a signal (represented by arrow 910) to primary device 902. The signal indicates that an incoming call is detected at companion device 904. The signal can further include other contextual information regarding companion device 904. In some examples, upon detecting the incoming call, companion device 904 outputs an indication of the incoming call. The output serves to alert a user to the incoming call. The output includes, for example, audio, visual, and/or haptic output. In some examples, primary device 902 does not output an audio indication of the incoming call in response to receiving the signal from companion device 904. In other examples, in response to receiving the signal, primary device 902 presents an audio, visual, and/or haptic output to alert the user of the incoming call.

In some examples, the signal (represented by arrow 910) received by primary device 902 from companion device 904 includes information regarding the calling party. The information includes, for example, caller identification (ID) information. In some examples, the information includes the contact alias of the calling party as listed in the contacts stored on companion device 904. In some examples, the information regarding the calling party is automatically provided via the signal in accordance with an activated setting (e.g., accessibility setting) on companion device 904. In response to receiving the signal, primary device 902 outputs (e.g., via a speaker) spoken dialogue containing the information regarding the calling party. For example, if the calling party corresponds to the contact alias "mom," primary device 902 outputs spoken dialogue announcing "Mom is calling."

As represented by arrow 912, a user utterance (e.g., "Hey Siri, answer") is received at primary device 902 (e.g., using I/O processing module 728 via microphone 213). In some examples, the user utterance is received in conjunction with invoking a digital assistant on primary device 902. The digital assistant is invoked, for example, upon determining that a first portion of the user utterance contains a predefined spoken trigger (e.g., "Hey Siri,... "). Invoking the digital assistant causes primary device 902 to obtain audio data containing a second portion of the user utterance (e.g., "... answer") and to automatically perform speech recognition and natural language processing on the second portion of the user utterance. In other examples, the user utterance can be received upon or after invoking the digital assistant on primary device 902 (e.g., upon pressing a button to invoke the digital assistant).

Upon receiving the user utterance, primary device 902 sends a representation of the user utterance and associated contextual information (represented by arrow 914) to DA server 906. The contextual information includes, for example, information similar to that described above in the example of FIG. 8. In some examples, the contextual information includes information represented in the received signal. For example, the contextual information indicates that an incoming call is detected at companion device 904.

In accordance with receiving the representation of the user utterance and the associated contextual information, DA server 906 automatically determines a user intent corresponding to the user utterance (e.g., by performing automatic speech recognition and natural language processing). For example, based on the contextual information and a text representation of the second portion of the user utterance "answer," DA server 906 determines that the "telephony" super domain is most relevant to the user utterance. Within the "telephony" super domain, DA server 906 further determines that the "answer call" actionable intent node is most relevant to the user utterance. Based on this determination, DA server 906 determines that the user intent corresponding to the user utterance is to answer a call.

In some examples, the contextual information is used by DA server 906 to disambiguate between several likely user intents. For example, based on the contextual information indicating that an incoming call is currently detected at companion device 904, DA server 906 can select the "answer call" actionable intent node in the "telephony" super domain as being most relevant to the user utterance as opposed to the "answer email" actionable intent node in the "email" super domain. In another example, based on the contextual information indicating that primary device 902 is a smart speaker having no display, DA server 906 can select the "answer call" actionable intent node in the "telephony" super domain as being most relevant to the user utterance as opposed to the "answer call" actionable intent node in the "videotelephony" super domain.

In accordance with the user intent corresponding to the actionable intent of answering the incoming call, DA server 906 performs one or more tasks corresponding to the actionable intent. The one or more tasks include, for example, generating and sending a command to primary device 902 (represented by arrow 916). The command represents a task to satisfy the actionable intent of answering the incoming call. In some examples, the command specifies the domain of the user intent. For example, the command specifies the "answer call" actionable intent node of the "telephony" super domain.

In some examples, DA server 906 generates and sends the command after verifying that the contextual information indicates that companion device 904 detected an incoming call. If the contextual information does not indicate that companion device 904 (or any other associated device) detected an incoming call, DA server 906 returns an error indication to primary device 902. The error indication, for example, causes DA server 906 to output dialogue informing the user that there is no incoming call to answer at the moment. In some examples, the error indication causes DA server 906 to output a prompt asking whether or not the user wishes to place a call.

Primary device 902 analyzes the command from DA server 906 and determines, based on a set of rules, which device of multiple possible connected devices is to execute the command. For example, by applying the set of rules, primary device 902 determines that the command is to be executed by companion device 904 because the "answer call" actionable intent node is part of the "telephony" super domain and companion device 904 has telephony capabilities. Additionally, in some examples, primary device 902 determines which device is to execute the command based on the operating states of the multiple possible devices. For example, based on the signal indicating that companion device 904 detects an incoming call, primary device 902 determines that the operating state of companion device 904 is most relevant to the "answer call" actionable intent node and thus determines that companion device 904 is to execute the command.

In accordance with a determination that companion device 904 is to execute the command, primary device 902 sends instructions (as represented by arrow 916) to companion device 904 via the established wireless communication connection. The instructions cause companion device 904 to perform tasks corresponding to the user intent of answering a call. In some examples, the instructions include the same command received by primary device 902 from DA service 906. In these examples, primary device 902 forwards the command to companion device 904 for execution.

Upon receiving a command specifying the "answer call" actionable intent node of the "telephony" super domain, companion device 904 executes the corresponding tasks of answering the incoming call and establishing a telephone connection with the external device of the calling party. In some examples, the corresponding tasks include providing audio data of the answered incoming call to the electronic device. For example, audio data for the answered call is exchanged between primary device 902 and companion device 904 (represented by arrow 918). In some examples, the corresponding tasks include providing audio data of the answered incoming call to the electronic device.

Upon executing the command or attempting to execute the command, companion device 904 generates and sends a confirmation signal (represented by arrow 922) to primary device 902. In some examples, upon receiving the confirmation signal, primary device 902 sends a representation of the confirmation signal (represented by arrow 920) to DA server 906. The confirmation signal indicates the outcome of companion device 904 attempting to execute the command. For example, the confirmation signal provides confirmation that the incoming call is successfully answered and that a telephone connection is established between companion device 904 and the device of the calling party. In some examples, upon receiving a confirmation signal indicating that the incoming call is successfully answered, primary device 902 outputs an indication (e.g., audio, visual, and/or haptic) informing the user that the incoming call is successfully answered.

In examples where the command to answer the incoming call is successfully executed, companion device 904 provides audio data (represented by arrow 918) of the answered incoming call to primary device 902. The audio data is sent to primary device 902 via the previously established wireless communication channel and includes representations of audio signals transmitted from the calling party. Primary device 902 receives the audio data (e.g., using RF circuitry 208) and produces audio output (e.g., using audio circuitry 210 and speaker 211) in accordance with the received audio data. Further, audio data representing speech received at a microphone of primary device 902 is sent to companion device 904, which transmits the audio data to the calling party (e.g., via the cellular network). In some examples, companion device 904 does not produce audio output corresponding to the audio data and instead relies on primary device 902 to produce audio output.

In some examples, execution of the command is unsuccessful. In these examples, the confirmation signal indicates the type of error associated with the unsuccessful execution of the command. For example, the confirmation signal includes a first error code indicating that_the incoming call terminated prior to companion device 904 executing the command and that the incoming call includes caller identification information. In another example, the confirmation signal includes a second error code indicating that the incoming call terminated prior to companion device 904 executing the command and that the incoming call does not include caller identification information. Upon receiving a confirmation signal with an error code, primary device 902 processes the error code in conjunction with DA server 906 and provides a corresponding response to the user (e.g., using task flow processing module 736, dialogue flow processing module 734, and speech synthesis processing module 740). For example, primary device 902 sends the error code to DA server 906 (e.g., represented by arrow 920). Based on the error code, DA server 906 provides a corresponding dialogue response to primary device 902 (represented by arrow 924). For example, in accordance with a first error code indicating that the incoming call terminated prior to companion device 904 executing the command and that the incoming call includes caller identification information, DA server 906 sends primary device 902 a dialogue response that informs the user of the error and prompts the user to return the call based on the caller identification information (e.g., "Sorry, you missed a call from your mom. Would you like to call her back?").

In another example, in accordance with a second error code indicating that the incoming call terminated prior to companion device 904 executing the command and that the incoming call does not include caller identification information, DA server 906 sends primary device 902 a dialogue response that informs the user of the error without prompting the user to return the call (e.g., "Sorry, you missed the call.").

Upon receiving the dialogue response from DA server 906, primary device 902 outputs (e.g., via a speaker of primary device 902) the dialogue response in spoken form. In examples where the dialogue response prompts the user to return the call based on the caller identification information, primary device 902 automatically detects a spoken response from the user and causes DA server 906 to determine a corresponding user intent for the spoken response. In accordance with DA server 906 determining that the user intent for the spoken response corresponds to the actionable intent of placing a call using the caller identification information, DA server 906 sends primary device 902 a command to cause companion device 904 to initiate a call using the caller identification information.

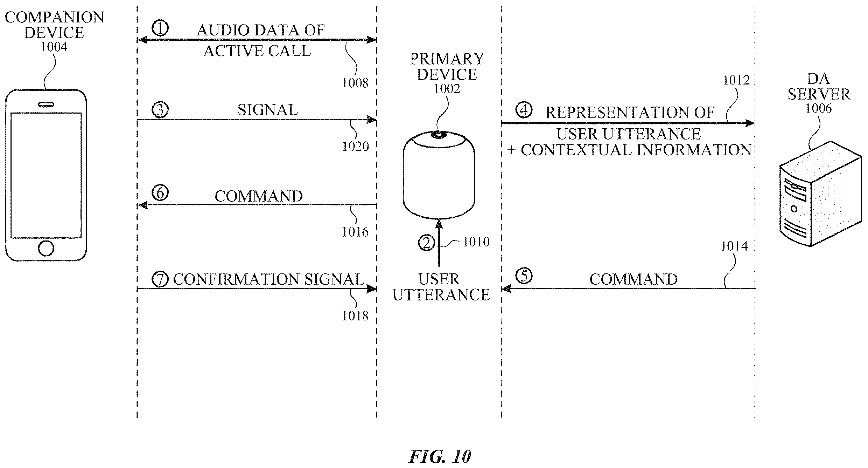

FIG. 10 illustrates techniques for using voice interaction at primary device 1002 to cause companion device 1004 to perform call-related tasks while companion device 1004 is engaged in an active call, according to various examples. Primary device 1002 and companion device 1004 are similar or identical to primary device 802 and companion device 804, respectively. Some aspects of the present technique are performed using DA server 1006, which is similar or identical to DA server 806. In some examples, any of these aspects can alternatively be performed locally at primary device 1002 and/or companion device 1004.

In the present example of FIG. 10, companion device 1004 is engaged in an active call. For example, an active telephone call or video call connection is established between companion device 1004 and an external device (e.g., via a telephone, cellular, or Internet network). In some examples, the active call is established upon primary device 1002 successfully causing companion device 1004 to place a call (e.g., as described in FIG. 8). Alternatively, the active call is established, for example, upon primary device 1002 successfully causing companion device 1004 to answer an incoming call (e.g., as described in FIG. 9).

As represented by arrow 1008, audio data associated with the active call is exchanged between companion device 1004 and primary device 1002. The audio data is exchanged, for example, via a previously established wireless communication connection between primary device 1002 and companion device 1004. The wireless communication connection is established in a similar manner as described above in FIG. 8. In some examples, primary device 1002 sends companion device 1004 audio data representing audio signals received at a microphone of primary device 1002 during the active call. Companion device 1004 then transmits the audio data from primary device 1002 to the external device via the active call connection. Similarly, companion device 1004 receives audio data from the external device audio data via the active call connection and provides the audio data to primary device 1002. Primary device 1002 outputs audio (e.g., at a speaker of primary device 1002) corresponding to the received audio data. The received audio data represents audio signals received by a microphone of the external device during the active call.

As represented by arrow 1010, primary device 1002 receives a user utterance (e.g., via a microphone of primary device 1002) during the active call. For example, the user utterance is received while primary device 1002 outputs audio in accordance with the received audio data associated with the active call. The user utterance can be natural language speech representing one of a plurality of call-related tasks that the user wishes primary device 1002 to perform in conjunction with companion device 1004. For example, the user utterance includes one of the following utterances:
"Hey Siri, hang up."
"Hey Siri, enter 3."
"Hey Siri, place on hold."
"Hey Siri, transfer to my sister."
"Hey Siri, join in the call."
"Hey Siri, answer the call."

In some examples, primary device 1002 receives a signal containing contextual information prior to or in conjunction with receiving the user utterance. As represented by arrow 1020, the signal is received from companion device 1004. In some examples, the signal is received from a different companion device that is communicatively coupled to primary device 1002. The contextual information includes, for example, an operating state of companion device 1004 that is relevant to the received user utterance. For example, the signal indicates that companion device 1004 is currently engaged in an active call. In some examples, the signal further indicates that companion device 1004 detects an incoming call separate from the current active call. In some examples, the signal indicates that while companion device 1004 is currently engaged in an active call, a companion device other than companion device 1004 detects an incoming call. In some examples, based on the received signal, primary device 1002 outputs spoken dialogue announcing the separate incoming call. For example, the spoken dialogue can state: "You have another incoming call from John on the same line" or "Incoming call on Bob's phone." In some examples, although the spoken dialogue is outputted from a speaker of primary device 1002, the audio data corresponding to the spoken dialogue is not sent to companion device 1004. For example, primary device 1002 performs signal cancellation on the audio input received at a microphone of the primary device 1002 to cancel out the portion of the audio input corresponding to the outputted spoken dialogue. In this way, the far-end party of the active call would not hear the spoken dialogue announcing the separate incoming call.

In some examples, the user utterance is received in conjunction with invoking a digital assistant on primary device 1002. For example, the digital assistant is invoked in a similar manner as described above in FIGS. 8 and 9. Depending on the manner in which the digital assistant is invoked, audio data corresponding to the user utterance may or may not be sent by primary device 1002 to companion device 1004. In some examples, if the digital assistant is invoked in response to detecting a user input corresponding to a first predetermined type (e.g., detecting that a first portion of the user utterance contains a predefined spoken trigger, such as "Hey Siri,"), then primary device 1002 includes a representation of the user utterance in the audio data sent to companion device 1004. As a result, the far-end party of the active call will hear the user utterance. Alternatively, if the digital assistant is invoked in response to detecting a user input corresponding to a second predetermined type (e.g., a button push), then primary device 1002 does not include a representation of the user utterance in the audio data sent to companion device 1004. For example, primary device 1002 cancels a portion of the audio data corresponding to the user utterance. As a result, the far-end party of the active call will not hear the user utterance. This can be desirable when the user utterance represents a request that the user wishes to keep private. For example, if the user is currently on an active call with the user's mother, the user may want to find out the birthday of the user's mother without the user's mother knowing. In this situation, the user may privately invoke the digital assistant (e.g., second predetermined type) to provide the user utterance "When's my mother's birthday?" Additionally, for such private digital assistant requests, any spoken dialogue response provided by the digital assistant would also be removed from the audio data sent to companion device 1004. Thus, the far-end party will not hear the spoken dialogue response provided by the digital assistant.

In some examples, the digital assistant implemented on primary device 1002 can be invoked by an utterance represented in audio data received from the far-end party of the active call. For example, the utterance from the far-end party can be "Hey Siri, find us a good Japanese restaurant." In these examples, primary device 1002 analyzes audio data of the active call received from companion device 1004 and determines (e.g., using speaker recognition techniques) whether an utterance represented in the audio data corresponds to a predefined spoken trigger. If primary device 1002 determines that a first portion of the utterance contains a predefined spoken trigger (e.g., "Hey Siri,... "), then primary device 1002 invokes the digital assistant and automatically causes a second portion of the utterance (e.g., "... find us a good Japanese restaurant") to undergo speech recognition and natural language processing (e.g., at DA server 1006). The utterance from the far-end party is processed in a similar manner as a user utterance received at a microphone of primary device 1002. Additionally, the spoken dialogue response provided by the digital assistant in response to the user utterance from the far-end party is sent to the far-end party via companion device 1004. Thus, the far-end party will hear the spoken dialogue response.

Upon receiving the user utterance (represented by arrow 1010), primary device 1002 sends a representation of the user utterance and associated contextual information to DA server 1006 (represented by arrow 1012). The contextual information includes, for example, information similar to that described in the above examples of FIGS. 8 and 9. The contextual information is based on one or more signals received from companion device 1004 and/or a different companion device. In some examples, the contextual information indicates that companion device 1004 is engaged in an active call. In some examples, where relevant, the contextual information further indicates that a separate incoming call is detected at companion device 1004 or at another companion device that is communicatively coupled to primary device 1002.

In accordance with receiving the representation of the user utterance and the associated contextual information, DA server 1006 automatically determines a user intent corresponding to the user utterance (e.g., by performing automatic speech recognition and natural language processing). As described in the examples of FIGS. 7A-7C, determining a user intent includes determining a domain (or super domain) that is most relevant to the user utterance.

In some examples, DA server 1006 permits processing of user intents unrelated to the currently active call. In other examples, DA server 1006 restricts processing of user intents unrelated to the current active call. Such restriction can be desirable to reduce disruptions to the active call caused by unintentional invocations of the digital assistant. For example, in accordance with the contextual information indicating that companion device 1004 is engaged in an active telephone call, DA server 1006 determines whether the domain determined to be most relevant to the user utterance corresponds to the "telephony" or "videotelephony" super domain (for controlling call functionality). If DA server 1006 determines that the domain most relevant to the user utterance is the "telephony" or "videotelephony" super domain, then DA server 1006 proceeds to complete natural language processing on the user utterance and performs one or more tasks to satisfy the user intent corresponding to the user utterance. Alternatively, if DA server 1006 determines that the domain most relevant to the user utterance is a domain other than the "telephony" super domain, then DA server 1006 forgoes performing one or more tasks to satisfy the user intent.

The determination of user intent for each of the above exemplary user utterances is now described in greater detail. For the user utterance "Hey Siri, hang up," DA server 1006 determines, based on the portion "...hang up" and the contextual information, that the "terminate call" actionable intent node in the "telephony" super domain is most relevant to the user utterance. For the user utterance "Hey Siri, enter 3," DA server 1006 determines, based on the portion "...enter 3" and the contextual information, that the "transmit DTMF tone" actionable intent node in the "telephony" super domain is most relevant to the user utterance. For the user utterance "Hey Siri, place on hold," DA server 1006 determines, based on the portion "...place on hold" and the contextual information, that the "hold call" actionable intent node in the "telephony" super domain is most relevant to the user utterance. For the user utterance "Hey Siri, transfer to my sister," DA server 1006 determines, based on the portion "...transfer to my sister" and the contextual information, that the "transfer call" actionable intent node in the "telephony" super domain is most relevant to the user utterance. For the user utterance "Hey Siri, join in the call," DA server 1006 determines, based on the portion "...join in the call" and the contextual information, that the "join call" actionable intent node in the "telephony" super domain is most relevant to the user utterance. For the user utterance "Hey Siri, answer the call," DA server 1006 determine, based on the portion "...answer the call," that the "answer call" actionable intent node in the "telephony" super domain is most relevant to the user utterance.

In some examples, the contextual information is used by DA server 1006 to disambiguate between multiple actionable intent nodes that may be determined to be highly relevant to the user utterance. For example, the utterance "hang up" or "place on hold" in isolation can be ambiguous with respect to whether the user wishes to hang up a telephone call (e.g., for cellular voice service) or a video call (e.g., for a telecommunications application software). If the contextual information indicates that companion device 1004 is currently engaged in an active telephone call but not a video call, then DA server 1006 would select the "telephony" super domain over the "videotelephony" domain as being most relevant to the user utterance.

In some examples, DA server 1006 resolves one or more parameters in the selected actionable intent node. The one or more parameters are resolved using information obtained from the user utterance and the contextual information. For example, based on the portion "3" in the user utterance "Hey Siri, enter 3," DA server 1006 determines that the value for the {character key} parameter in the "transmit DTMF tone" actionable intent node is "3."

Based on the determined user intent, DA server 1006 performs one or more tasks (e.g., in accordance with a corresponding task flow) to satisfy the user intent. The one or more tasks include, for example, generating and sending a command to primary device 1002 (represented by arrow 1014). The command represents one or more tasks to satisfy the user intent. In some examples, the command specifies the domain or actionable intent node corresponding to the user intent. Upon receiving the command from DA server 1006, primary device 1002 analyzes the command and determines, based on a set of rules, which device of multiple possible devices is to execute the command. The determination is based on the domain or actionable intent node specified in the command. Additionally, in some examples, the determination is based on the capabilities of each of the possible device. In some examples, primary device 1002 determines that the command is to be executed by itself and thus proceeds to execute the command. In other examples, primary device 1002 determines that a companion device (e.g., companion device 1004) is to execute the command. In these examples, primary device 1002 sends instructions to the companion device (as represented by arrow 1016). The instructions, when received by the companion device, cause the companion device to automatically perform one or more tasks to satisfy the user intent (e.g., without further input from the user). In some examples, the instructions include the same command received from DA server 1006.

The commands and resultant executed tasks for each of the above exemplary user utterances are now described in greater detail. For the user utterance "Hey Siri, hang up," the command received at primary device 1002 from DA server 1006 specifies the "terminate call" actionable intent node of the "telephony" super domain. Based on a set of rules and the "terminate call" actionable intent node, primary device 1002 determines that the command is to be executed by primary device 1002. In accordance with this determination, primary device 1002 executes the command by performing one or more tasks corresponding to the "terminate call" actionable intent node. For example, primary device 1002 ceases to obtain audio data (e.g., via its microphone) and output audio (e.g., via its speaker) associated with the active call. In some examples, primary device 1002 terminates communication with companion device 1004 related with the active call, which causes companion device 1004 to terminate the active call with the far-end party. In some examples, executing the command includes sending to companion device 1004 (e.g., via the previously established wireless communication connection) a signal that causes companion device 1004 to terminate the active call. The signal is different from the command received from the DA server 1006. For example, the signal can be a lower level signal that does not specify the "terminate call" actionable intent node of the "telephony" super domain. Executing the command at primary device 1002 rather than companion device 1004 can be desirable because it produces a quicker response from the perspective of the user. In addition, primary device 1002 is more quickly freed up to engage in a subsequent call with companion device 1004 or a different companion device.

In the example user utterance "Hey Siri, enter 3," the command received at primary device 1002 from DA server 1006 specifies the "transmit DTMF tone" actionable intent node of the "telephony" super domain, for example. The command also specifies the value "3" for the associated {character key} parameter. Primary device 1002 then determines, based on a set of rules, the "transmit DTMF tone" actionable intent node, and the telephony capabilities of companion device 1004, that the command is to be executed by companion device 1004. In accordance with this determination, primary device 1002 forwards the command received from DA server 1006 to companion device 1004. In response to receiving the command, companion device 1004 performs one or more tasks corresponding to the "transmit DTMF tone" actionable intent node. Specifically, companion device 1004 generates the DTMF tone for the character key "3" and transmits the tone on the active call to the far-end party.

In the example user utterance "Hey Siri, place on hold," the command received at primary device 1002 from DA server 1006 specifies the "hold call" actionable intent node of the "telephony" super domain, for example. Based on a set of rules, the "hold call" actionable intent node, and contextual information indicating that companion device 1004 is currently engaged in an active call, primary device 1002 determines that the command is to be executed by companion device 1004. In accordance with this determination, primary device 1002 forwards the command received from DA server 1006 to companion device 1004. In response to receiving the command, companion device 1004 performs one or more tasks corresponding to the "hold call" actionable intent node. Specifically, companion device 1004 places the active call on hold.

In the example user utterance "Hey Siri, transfer to my sister," the command received at primary device 1002 from DA server 1006 specifies the "transfer call" actionable intent node of the "telephony" super domain. The command also specifies a parameter value for the associated {call transfer number} parameter of the "transfer call" actionable intent node. The parameter value, for example, specifies a phone number to which the active call is to be transferred (e.g., the phone number corresponding to "sister"). Based on a set of rules, the "transfer call" actionable intent node, and contextual information indicating that companion device 1004 is currently engaged in an active call, primary device 1002 determines that the command is to be executed by companion device 1004. In accordance with this determination, primary device 1002 forwards the command received from DA server 1006 to companion device 1004. In response to receiving the command, companion device 1004 performs one or more tasks corresponding to the "transfer call" actionable intent node. Specifically, companion device 1004 places a call to a party (e.g., "sister") corresponding to the phone number specified in the {call transfer number} parameter and transfers the current active call to that party.

In the example user utterance "Hey Siri, join in the call," the command received at primary device 1002 from DA server 1006 specifies the "join call" actionable intent node of the "telephony" super domain. Based on a set of rules, the "join call" actionable intent node, and contextual information indicating that companion device 1004 detects a second incoming call while engaged in an active call, primary device 1002 determines that the command is to be executed by companion device 1004. In accordance with this determination, primary device 1002 forwards the command received from DA server 1006 to companion device 1004. In response to receiving the command, companion device 1004 performs one or more tasks corresponding to the "join call" actionable intent node. For example, companion device 1004 places the active call on hold, answers the second incoming call, and then merges the two calls to establish a three-way call.

It should be recognized that, in some examples, a three-way call can alternatively be established by calling another party and then merging that other party into the active call. For example, the user utterance received at primary device 1002 can be "Hey Siri, join Susan into the call." DA server 1006 determines that the "join call" actionable intent node is most relevant to this user utterance. In addition to specifying the "join call" actionable intent node, the command received at primary device 1002 from DA server 1006 specifies the phone number associated with the contact alias "Susan." Upon receiving the command from primary device 1002, companion device 1004 places the current active call on hold, establishes a second call by dialing Susan's phone number (e.g., specified in the {call join number} parameter of the "join call" actionable intent node) and then merges the two calls to establish a three-way call.

In the example user utterance "Hey Siri, answer the call," the command received at primary device 1002 from DA server 1006 specifies the "answer call" actionable intent node of the "telephony" super domain. Based on the contextual information, primary device 1002 determines which companion device 1004 is to execute the command. For example, if the contextual information indicates that a second incoming call is detected at companion device 1004 while companion device 1004 is engaged in an active call, then primary device 1002 determines that companion device 1004 is to execute the command and forwards the command to companion device 1004. Companion device 1004 then answers the second incoming call to establish a second active call. In addition, companion device 1004 either terminates the original active call or places it on hold. Audio data associated with the second active call is then sent to primary device 1002 for output.

In other examples, the contextual information indicates that a second incoming call is detected at a second companion device while companion device 1004 is engaged in an active call. In these examples, primary device 1002 determines that the second companion device is to execute the command specifying the "answer call" actionable intent node and forwards the command to the second companion device. In response to receiving the command, the second companion device answers the second incoming call to establish a telephone connection with the calling party. In addition, primary device 1002 disconnects from the original active call on companion device 1004. In particular, primary device 1002 transfers operation of the original active call back to companion device 1004 and ceases to obtain audio input (e.g., via its microphone) or receive audio data (e.g., from companion device 1004) associated with the original active call.

Upon executing the command, companion device 1004 (or another companion device) sends a confirmation signal (represented by arrow 1018) to primary device 1002. The confirmation signal is similar to that described above in FIGS. 8 and 9. For example, the confirmation signal indicates whether or not the command was successfully executed. As described in FIGS. 8 and 9, primary device 1002 can provide an indicator, based on the confirmation signal, as to whether or not the command was successfully executed.

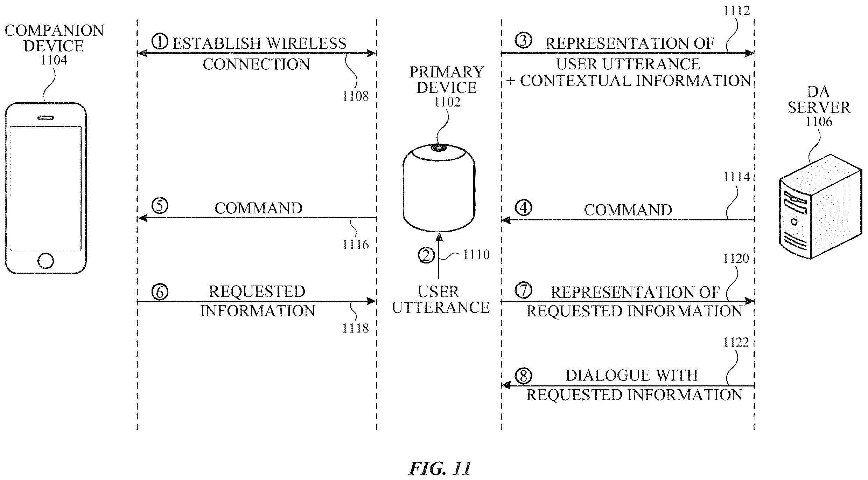

FIG. 11 illustrates techniques for using voice interaction at primary device 1102 to cause companion device 1104 to provide call-related information, according to various embodiments of the invention. Primary device 1102 and companion device 1104 are similar or identical to primary device 802 and companion device 804, respectively. Some aspects of the present technique are performed using DA server 1106, which is similar or identical to DA server 806. In some examples, any of these aspects can alternatively be performed locally at primary device 1102 and/or companion device 1104.

As represented by arrow 1108, a wireless communication connection is initially established between primary device 1102 and companion device 1104. The wireless communication connection is established in a similar manner as described above in FIG. 8. Primary device 1102 receives a user utterance (as represented by arrow 1110). In the present example, the user utterance can represent a request for information stored on companion device 1104. In some examples, the requested information is call-related information. For example, the utterance is "Hey Siri, play my voice mails" or "Hey Siri, tell me what calls I missed." In some examples, the user utterance is received in conjunction with or upon invoking a digital assistant on primary device 1102. Invoking the digital assistant causes primary device 1102 to obtain audio data (e.g., via a microphone) containing at least a portion of the user utterance and to automatically perform speech recognition and natural language processing on the portion of the user utterance.

Upon receiving the user utterance, primary device 1102 sends a representation of the user utterance and associated contextual information to DA server 1106 (represented by arrow 1112). The contextual information includes, for example, information similar to that described above in the examples of FIGS. 8-10. In some examples, the contextual information includes information indicated in a signal received from companion device 1104 (similar to the signal described in FIGS. 8-10).

In accordance with receiving the representation of the user utterance and the associated contextual information, DA server 1106 automatically determines a user intent corresponding to the user utterance (e.g., by performing automatic speech recognition and natural language processing). In some examples, the determined user intent relates to obtaining and presenting call-related information. For example, based on the contextual information and a text representation of the user utterance "... play my voice mails," DA server 1106 determines that the "play voicemail" actionable intent node of the "telephony" super domain is most relevant to the user utterance. Based on this determination, DA server 1106 determines that the user intent corresponding to the user utterance is to play recent voicemails. In another example, based on the contextual information and a text representation of the user utterance "...tell me what calls I missed," DA server 1106 determines that the "list missed calls" actionable intent node of the "telephony" super domain is most relevant to the user utterance. Based on this determination, DA server 1106 determines that the user intent corresponding to the user utterance is to present a list of recent missed calls.

Based on the determined user intent, DA server 1106 generates and sends a command to primary device 1102 (represented by arrow 1114). The command represents a task to satisfy the user intent. In some examples, the command specifies the domain or actionable intent node of the user intent. Additionally, in some examples, the command includes values for one or more parameters associated with the domain or actionable intent node. Upon receiving the command from DA server 1106, primary device 1102 analyzes the command and determines which device of multiple possible devices is to execute the command. The determination is based on, for example, a set of rules, the actionable intent node specified in the command, and contextual information. In the example utterance "... play my voice mails," the command specifies the "play voicemail" actionable intent node. Based on a set of rules, the "play voicemail" actionable intent node, and contextual information indicating that companion device 1104 has telephone capabilities (including voicemail), primary device 1102 determines that the command is to be executed by companion device 1104. Similarly, in the example utterance "... tell me what calls I missed," DA server 1106 determines, based on a set of rules, the "list missed calls" actionable intent node, and contextual information indicating that companion device 1104 has telephone capabilities (including recent call logging), primary device 1102 determines that the command is to be executed by companion device 1104.

In accordance with determining that the command is to be executed by companion device 1104, primary device 1102 sends instructions to companion device 1104 (represented by arrow 1116). The instructions cause companion device 1104 to automatically perform one or more tasks to satisfy the user intent (e.g., without further input from the user). In some examples, the instructions include the same command received from DA server 1106. For example, primary device 1102 forwards the command from DA server to companion device 1104 (represented by arrow 1116).

In response to receiving the command, companion device 1104 performs one or more tasks corresponding to the user intent. For example, if the user intent relates to obtaining and presenting call-related information, companion device 1104 retrieves the call-related information and sends the call-related information to primary device 1102 for presentation (represented by arrow 1118). Specifically, returning to the example utterance "... play my voice mails," companion device 1104 performs one or more tasks corresponding to the "play voicemail" actionable intent node. The one or more tasks include, for example, identifying the N most recent voicemail audio files (where N is a predefined positive integer) stored on companion device 1104 and sending the voicemail audio files to primary device 1102 for presentation. Each voicemail audio file includes call information (e.g., phone number, time, contact alias, etc.) and an audio recording of the voicemail. Similarly, for the example utterance "... tell me what calls I missed," companion device 1104 performs one or more tasks corresponding to the "list missed calls" actionable intent node. The one or more tasks include, for example, obtaining call information (e.g., phone number, time, contact alias, etc.) for the N most recent missed call (where N is a predefined positive integer) stored on companion device 1104 and sending the call information to primary device 1102 for presentation.

Upon receiving the call-related information from companion device 1104, primary device 1102 sends a representation of the information to DA server 1106 (represented by arrow 1120), which constructs a spoken dialogue with the call-related information (e.g., using dialogue flow processing module 734). The spoken dialogue is then sent to primary device 1102 (represented by arrow 1122) where it is outputted via a speaker of primary device 1102.

By way of example, continuing with the example utterance "... play my voice mails," primary device 1102 sends DA server 1106 caller information for the N most recent voicemail audio files. DA server 1106 then constructs a spoken dialogue with the caller information such as, for example, "Here are your three most recent voice messages. The first is from John Adams received at 2:43pm on May 8th, 2018... " Primary device 1102 plays the spoken dialogue received from DA server 1106 and incorporates playing of the voicemail audio file into the spoken dialogue.

Similarly, in the example utterance "...tell me what calls I missed," primary device 1102 sends DA server 1106 caller information for the N most recent missed calls. DA server 1106 then constructs a spoken dialogue with the caller information such as, for example, "You have three missed calls. The first is from Susan White at 12:15pm on May 2nd, 2018..." Primary device 1102 then plays the spoken dialogue received from DA server 1106. In some examples, the spoken dialogue includes a prompt to return a call to any of the missed calls.

Although not depicted in FIG. 11, it should be recognized that a confirmation signal similar to that described in FIGS. 8-10 can be sent by companion device 1104 to primary device 1102 to indicate whether the command is successfully executed.

### 4. Process for accessing call functionality using voice interaction

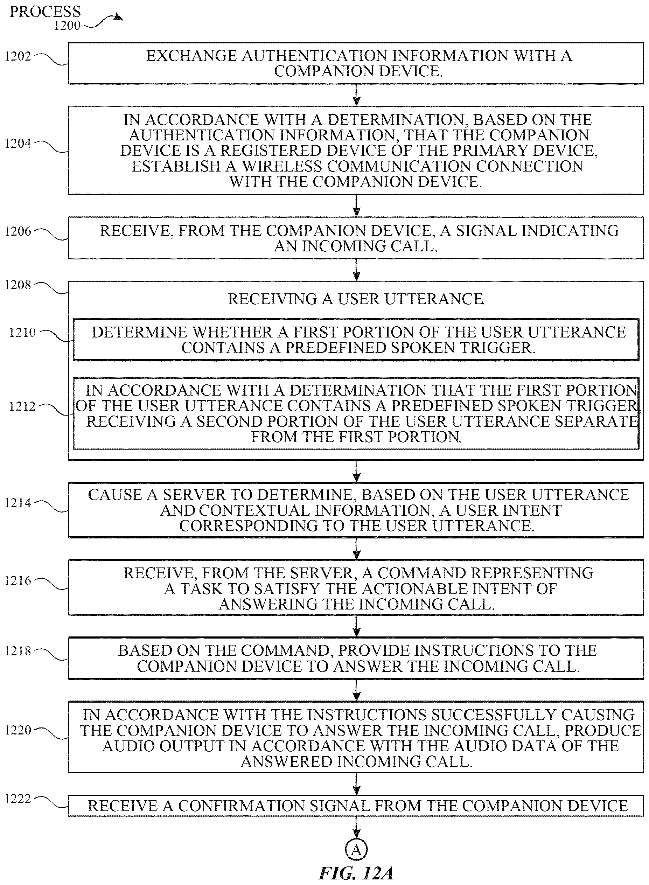

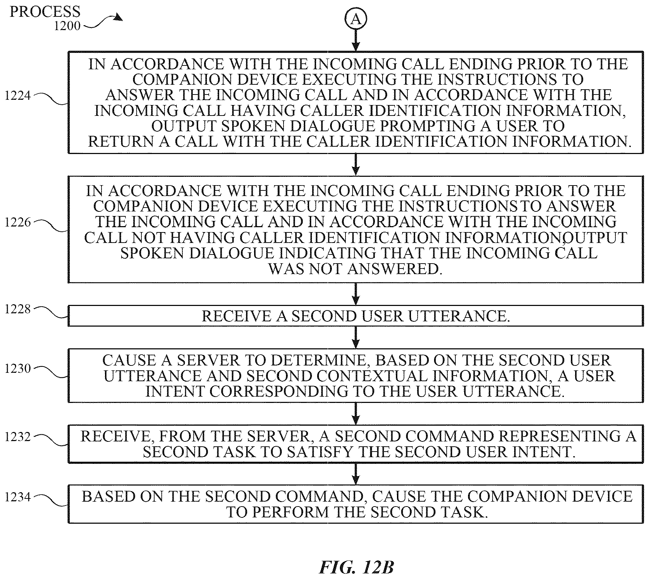

FIGS. 12A-12B illustrate process 1200 for using voice interaction to access call functionality of a companion device, according to various examples. Process 1200 is performed, for example, using one or more electronic devices implementing a digital assistant. In some examples, process 1200 is performed using a client-server system (e.g., system 100), and the blocks of process 1200 are divided up in any manner between the server (e.g., DA server 106) and one or more client devices (e.g., user devices 104 and 122). Thus, while portions of process 1200 are described herein as being performed by particular devices of a client-server system, it will be appreciated that process 1200 is not so limited. In some examples, process 1200 is performed using only a client device (e.g., user device 122) or multiple client devices (e.g., user devices 104 and 122). In process 1200, some blocks are, optionally, combined, the order of some blocks is, optionally, changed, and some blocks are, optionally, omitted. In some examples, additional steps may be performed in combination with the process 1200.

Process 1200 can be implemented to cause a companion device to answer an incoming call based on voice interaction at a primary device. As described in greater detail below, process 1200 includes, for example, receiving a signal indicating the incoming call at the companion device. Based on a received user utterance and contextual information, process 1200 causes a server to determine a user intent corresponding to the user utterance. The contextual information is based on the received signal from the companion device. In accordance with the user intent corresponding to an actionable intent of answering the incoming call, process 1200 performs several operations including receiving, from the server, a command representing a task to satisfy the actionable intent of answering the incoming call. The operations further include, based on the command, providing instructions to the companion device to answer the incoming call and relay audio data of the answered incoming call to the electronic device. In accordance with the instructions successfully causing the companion device to answer the incoming call, audio output at the speaker of the electronic device is outputted according to the audio data of the answered incoming call received from the companion device.

Receiving a signal indicating an incoming call at the companion device and causing a server to determine a user intent based on contextual information derived from the signal enables a primary device to accurately obtain a command that represents a task corresponding to the received user utterance. In addition, the signal enables the primary device to recognize that the command should be executed by the companion device and thus the primary device can efficiently provide instructions to the companion device to perform the task of answering the incoming call. This enables the primary device to function as an intelligent centralized hub to process spoken user requests and coordinate the distribution of resultant commands. As a result, voice interaction at the primary device can be used to access the call functionality of the companion device, which improves user accessibility to the companion device and provides a better user experience. For example, a user need not be proximate to the companion device to answer an incoming call on the companion device. Instead, the user can provide a spoken request to the primary device and cause the companion device to answer the incoming call and transfer audio data from the answered call to the primary device.

Moreover, using voice interaction at the primary device to access the call functionality of the companion device enables the features of each device to be leveraged in a manner that produces an improved user experience. For example, the primary device is a smart speaker that does not have stand-alone call functionality, but has microphones and speakers that deliver high-quality audio suitable for far-field voice interaction. In contrast, the companion device is a smart phone that has stand-alone call functionality. However, the microphone and speakers of the companion device do not deliver audio of suitable quality for far-field voice interaction. By using voice interaction at the primary device to access the call functionality of the companion device, the microphones and speakers of the primary device can be combined with the call functionality of the companion device to accurately and efficiently process far-field spoken requests to answer an incoming call on the companion device. In addition, the quality of audio exchanged during the answer call can be improved as a result of conducting the call via the primary device.

Turning now to the operations depicted in FIGS. 12A-12B, at block 1202, authentication information is exchanged (e.g., using communication module 228) with a companion device. The exchanged authentication information serves to verify whether the companion device is a registered device of the primary device. The primary device is, for example, similar or identical to device 122, described above and the companion device is, for example, similar to device 104, described above. In some examples, the companion device has stand-alone call functionality whereas the primary device does not have stand-alone call functionality. In these examples, the primary device is not capable of initiating an outgoing call or receiving an incoming call from an external device without relying on the call functionality of the companion device. In some examples, block 1202 is performed prior to blocks 1206 and 1208.

At block 1204, in accordance with a determination, based on the authentication information, that the companion device is a registered device of the primary device, a wireless communication connection is established with the companion device (e.g., as represented by arrow 908 in FIG. 9). The wireless communication connection is established using, for example, a communication module (e.g., communication module 228) and RF circuitry (e.g., RF circuitry 208) of the primary device. Alternatively, in accordance with a determination, based on the authentication information, that the companion device is not a registered device of the primary device, a wireless communication connection is not established with the companion device. It should be recognized that, in some examples, establishing a wireless communication connection is required to receive the signal of block 1206 and to provide the instructions of block 1218.

At block 1206, a signal is received from the companion device (e.g., as represented by arrow 910 in FIG. 9). The received signal indicates, for example, an incoming call at the companion device. In some examples, the signal is received via the established wireless communication connection of block 1204. In some examples, the signal is received, for example, by an I/O processing module (e.g., I/O processing module 728) of a digital assistant module (e.g., digital assistant module 726) implemented on the primary device.

In some examples, while receiving the signal, the companion device outputs an indication of the incoming call (e.g., audio, visual, or haptic indication) whereas the primary device does not output an audio indication of the incoming call. In particular, outputting an indication of the incoming call at the companion device without outputting an audio indication of the incoming call at the primary device can enhance the user's experience by not overwhelming the user with multiple notification signals.

In some examples, the signal includes information regarding a caller of the incoming call. In some examples, in response to receiving the signal, spoken dialogue containing the information regarding the caller is automatically outputted (e.g., using speech synthesis module 740 and via speaker 211).

At block 1208, a user utterance is received (e.g., as represented by arrow 912 in FIG. 9). The user utterance is received at an I/O Processing Module (e.g., I/O Processing Module 728) via a microphone (e.g., microphone 213) of the primary device. The user utterance includes, for example, spoken natural language representing a request for a device to perform a task. In some examples, the user utterance is ambiguous regarding the device that the user wishes to perform the task. In some examples, the user utterance is ambiguous regarding the specific task that the user wishes to be performed.

In some examples, the user utterance is received in conjunction with invoking a digital assistant of the primary device. In these examples block 1208 includes determining whether a first portion of the user utterance contains a predefined spoken trigger (block 1210). In accordance with a determination that the first portion of the user utterance contains a predefined spoken trigger, a second portion of the user utterance separate from the first portion is received (block 1212). In particular, process 1200 automatically processes the second portion of the user utterance to determine a user intent (e.g., using STT processing module 730 and natural language processing module 732). Alternatively, in accordance with a determination that the first portion of the user utterance does not contain a predefined spoken trigger, process 1200 ceases to process the user utterance and waits for a subsequent user utterance to be received.

At block 1214, process 1200 causes a server (e.g., DA server 106) to determine, based on the user utterance and contextual information, a user intent corresponding to the user utterance (e.g., as represented by arrow 914 in FIG. 9). For example, a representation of the user utterance and the contextual information is sent to the server, which causes the server to determine a text representation of the user utterance (e.g., using STT processing module 730). Based on the text representation and the contextual information, a user intent is determined (e.g., using natural language processing module 732). In accordance with the user intent corresponding to an actionable intent of answering the incoming call, the operations of blocks 1216-1220 are performed.

In some examples, the contextual information is based on the signal of block 1206. For example, contextual information includes an operating state of the companion device. Specifically, the contextual information specifies that an incoming call is detected at the companion device. In some examples, the contextual information specifies that a wireless communication connection is established between the primary device and the companion device and that the companion device is a registered device of the electronic device. In some examples, the contextual information specifies the capabilities of the companion device (e.g., call functionality, email functionality, etc.).

At block 1216, a command is received from the server (e.g., as represented by arrow 916 of FIG. 9). The received command represents a task to satisfy the actionable intent of answering the incoming call. In some examples, the command specifies the domain or actionable intent node of the user intent. For example, the command specifies the "answer call" actionable intent node of the "telephony" super domain corresponding to the determined user intent.

At block 1218, based on the command, instructions are provided to the companion device (e.g., as represented by arrow 916). The instructions are provided, for example, via the established wireless communication connection of block 1204. The instructions cause the companion device to answer the incoming call. In some examples, the instructions further cause the companion device to relay audio data of the answered incoming call to the primary device. In some examples, the instructions include the command of block 1216.

In some examples, block 1218 includes determining whether the command is to be executed by the companion device. The determination is based on, for example, a set of rules, the actionable intent, and the contextual information. In these examples, the instructions are provided to the companion device in accordance with a determination that the command is to be executed by the companion device.

In some examples, the incoming call at the companion device is an incoming video call. In these example, the provided instructions cause the companion device to answer the incoming video call as an audio call. For example, video data is not exchanged between the primary device and the companion device for the answered call.

At block 1220, in accordance with the instructions successfully causing the companion device to answer the incoming call, audio output is produced in accordance with the audio data of the answered incoming call. For example, the primary device receives the audio data of the answered incoming call from the companion device (e.g., represented by arrow 918 in FIG. 9) and generates corresponding audio output from a speaker (e.g., speaker 211) of the primary device. The audio data includes, for example, speech data received at a microphone of an external device that initiated the call (e.g., the calling party).

At block 1222, a confirmation signal is received from the companion device (e.g., represented by arrow 922 in FIG. 9). The confirmation signal indicates whether the incoming call was successfully answered. In examples where the incoming call was not successfully answered, the confirmation signal indicates an error code representing the type of error that occurred. In some examples, a representation of the confirmation signal is provided to the server. In some examples, block 1222 is performed after block 1218.

At block 1224, spoken dialogue prompting a user to return a call is outputted (e.g., via a speaker of the primary device). The dialogue is, for example, generated by the server (e.g., DA server 106) based on the confirmation signal. The primary device thus receives the dialogue from the server (e.g., as represented by arrow 924 in FIG. 9). In some examples, block 1224 is performed in accordance with the incoming call ending prior to the companion device executing the instructions to answer the incoming call and in accordance with the incoming call having caller identification information. In some examples, the spoken dialogue includes the caller identification information. For example, the spoken dialogue prompts the user to place a call in accordance with the caller identification information.

At block 1226, spoken dialogue indicating that the incoming call was not answered is outputted. The spoken dialogue does not prompt a user to return a call. The dialogue is received, for example, from the server (e.g., as represented by arrow 924 in FIG. 9). For example, the server generates the spoken dialogue based on the confirmation signal. Block 1226 is performed in accordance with the incoming call ending prior to the companion device executing the instructions to answer the incoming call and in accordance with the incoming call not having caller identification information.

At block 1228, a second user utterance is received (e.g., as represented by arrow 1010 in FIG. 10). The second user utterance is received while the companion device is engaged in an active call. The active call is established, for example, as a result of the companion device successfully answering the incoming call in accordance with the provided instructions (block 1218). In some examples, the second user utterance is received while producing the audio output (e.g., at a speaker of the primary device) in accordance with the audio data of the answered incoming call (block 1220).

At block 1230, process 1200 causes the server (e.g., DA server 106) to determine, based on the second user utterance and second contextual information, a second user intent corresponding to the second user utterance (e.g., as represented by arrow 1012 in FIG. 10). Block 1230 is similar to block 1214. In some examples, the second contextual information contains similar information as the contextual information of block 1214. In some examples, the second contextual information further indicates that the companion device is engaged in an active call. In some examples, upon determining the second user intent, the server generates a second command representing a second task to satisfy the second user intent.

In some examples, in accordance with the second user intent corresponding to an actionable intent other than controlling call functionality for the active call, process 1200 forgoes performing a task to satisfy the actionable intent other than controlling call functionality for the active call. For example, the server forgoes generating a second command to cause the primary device and/or companion device to satisfy the second user intent.

At block 1232, a second command representing a second task to satisfy the second user intent (e.g., as represented by arrow 1014 in FIG. 10) is received from the server. Block 1232 is similar to block 1216. In some examples, the second command specifies the domain or actionable intent node of the second user intent. For example, in accordance with the second user intent corresponding to the actionable intent of terminating the active call, the second command specifies the "terminate call" actionable intent node of the "telephony" super domain. In this example, the second task includes one or more tasks that satisfy the actionable intent of terminating the active call.

In another example, in accordance with the second user intent corresponding to the actionable intent of transmitting DTMF tones on the active call, the second command specifies the "transmit DTMF tone" actionable intent node of the "telephony" super domain. The second command also specifies, for example, one or more character keys of a telephone keypad. The specified one or more character keys correspond to, for example, one or more character keys defined in the second user utterance. In this example, the second task includes one or more tasks that satisfy the actionable intent of transmitting DTMF tones on the active call.

At block 1232, based on the second command, process 1200 causes the companion device to perform the second task to satisfy the second user intent. For example, second instructions are provided to the companion device based on the second command (e.g., as represented by arrow 1016 in FIG. 10). In some examples, the second instructions include the second command. The second instructions, when received and executed by the companion device, cause the companion device to perform the second task to satisfy the second user intent.

In some examples, in accordance with the second user intent corresponding to the actionable intent of terminating the active call, the second instructions cause the companion device to perform the second task of terminating the active call. In some examples, the second command of block 1232 is executed by the primary device, which in turn, causes the companion device to terminate the active call. For example, the primary device ceases to received audio data of the active call from the companion device, which causes the companion device to terminate the active call. Alternatively, the primary device sends a signal to the companion device which, when received by the companion device, causes the companion device to terminate the active call. The signal is, for example, different from the second command. Executing the second command at the primary device rather than the companion device can be desirable because it produces a quicker response from the perspective of the user. In addition, the primary device can be more quickly freed up to engage in a subsequent call with the companion device or a different companion device.

In other examples, in accordance with the second user intent corresponding to the actionable intent of transmitting DTMF tones on the active call, the second instructions cause the companion device to perform the second task of transmitting, on the active call, one or more DTMF tones corresponding to the one or more character keys specified in the second command (and defined in the second user utterance).

The operations described above with reference to FIGS. 12A-12B are optionally implemented by components depicted in FIGS. 1-4, 6A-B, and 7A-C. For example, the operations of process 1200 are implemented by communication module 228, RF circuitry 208, telephone module 238, and/or video conference module 239. The operations of process 1200 are further implemented by digital assistant module 726 (e.g., implemented in DA server 106 and DA client module 229), including I/O processing module 728, STT processing module 730, natural language processing module 732, dialogue flow processing module 734, task flow processing module 736, and service processing module 738, and/or speech synthesis processing module 738. It would be clear to a person having ordinary skill in the art how other processes are implemented based on the components depicted in FIGS. 1-4, 6A-6B, and 7A-7C.

In accordance with some implementations, a computer-readable storage medium (e.g., a non-transitory computer readable storage medium) is provided, the computer-readable storage medium storing one or more programs for execution by one or more processors of an electronic device, the one or more programs including instructions for performing any of the methods or processes described herein.

In accordance with some implementations, an electronic device (e.g., a portable electronic device) is provided that comprises means for performing any of the methods or processes described herein.

In accordance with some implementations, an electronic device (e.g., a portable electronic device) is provided that comprises a processing unit configured to perform any of the methods or processes described herein.

In accordance with some implementations, an electronic device (e.g., a portable electronic device) is provided that comprises one or more processors and memory storing one or more programs for execution by the one or more processors, the one or more programs including instructions for performing any of the methods or processes described herein.

Certain aspects of the present technology can include the gathering and use of data available from various sources to improve accurate determination of user intent and enable efficient and robust access of call functionality using voice interaction. The present disclosure contemplates that in some instances, this gathered data may include personal information data that uniquely identifies or can be used to contact or locate a specific person. Such personal information data can include demographic data, location-based data, telephone numbers, email addresses, twitter IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to determine user intent more accurately and reliably. Accordingly, use of such personal information data enables user to access call functionality using voice interaction more accurately and reliably. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of digital assistants, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user intent can be determined based on non-personal information data or a bare minimum amount of personal information, such as the content being requested by the device associated with a user, other non-personal information available to the digital assistant, or publicly available information.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

## Claims

1. A method for using voice interaction to access call-related information of a companion device (1104), the method comprising:
at an electronic device (1102) having a processor, memory, and a speaker:
receiving a user utterance (1110) representing a request for call-related information stored on the companion device, wherein the call-related information comprises information stored on the companion device based on one or more calls received by the companion device prior to the electronic device receiving the user utterance;
causing a server (1106) to determine, based on the user utterance, a user intent of providing call-related information;
receiving, from the server, a command (1114) representing a task to satisfy the user intent of providing call-related information;
determining, based on the command and contextual information, that the companion device is to execute the command;
in accordance with a determination that the companion device is to execute the command, providing instructions (1116) to the companion device to retrieve the call-related information and send (1118) the call-related information to the electronic device; and
in accordance with the instructions successfully causing the companion device to retrieve and send the call-related information to the electronic device, providing an audio output at the speaker, wherein the audio output includes the call-related information received from the companion device.

2. The method of claim 1, wherein the call-related information comprises a voicemail audio file stored on the companion device, and
wherein the voicemail audio file comprises call information for a voicemail and an audio recording of the voicemail.

3. The method of claim 2, wherein the audio output at the speaker comprises a first spoken dialogue response and the audio recording of the voicemail, and
wherein the first spoken dialogue response comprises the call information for the voicemail, and the method further comprising:
after receiving the call-related information at the electronic device and prior to providing the audio output at the speaker:
sending, to the server, a representation of the call information for the voicemail; and
receiving, from the server, the first spoken dialogue response comprising the call information.

4. The method of any of claims 1-3, wherein the call-related information comprises caller information stored on the companion device for one or more missed calls.

5. The method of claim 4, wherein the audio output at the speaker comprises a second spoken dialogue response, and
wherein the second spoken dialogue response comprises the caller information corresponding to the one or more missed calls.

6. The method of any of claims 1-5, wherein the command specifies an actionable intent node corresponding to the user intent, and wherein the instructions include the command.

7. The method of any of claims 1-6, wherein the contextual information indicates that the companion device has telephone capabilities.

8. The method of any of claims 1-7, further comprising:
at the electronic device:
prior to receiving the user utterance, exchanging authentication information with the companion device; and
in accordance with a determination, based on the authentication information, that the companion device is a registered device of the electronic device, establishing a wireless communication connection with the companion device,
wherein the instructions are provided via the established wireless communication connection, and
wherein the call-related information is received via the established wireless communication connection.

9. The method of claim 8, wherein the contextual information indicates that the wireless communication connection is established between the electronic device and the companion device.

10. The method of any of claims 1-9, further comprising:
after providing the instructions to the companion device, receiving a confirmation signal from the companion device, wherein the confirmation signal indicates whether the call-related information was successfully retrieved; and
providing a representation of the confirmation signal to the server.

11. The method of any of claims 1-10, further comprising:
determining, at the electronic device, whether a first portion of the user utterance contains a predefined spoken trigger; and
in accordance with a determination that the first portion of the user utterance contains a predefined spoken trigger, receiving a second portion of the user utterance separate from the first portion, wherein the user intent is determined from the second portion of the user utterance.

12. A non-transitory computer-readable storage medium storing one or more programs, the one or more programs comprising instructions, which when executed by one or more processors of an electronic device with a speaker, cause the electronic device to perform the methods of any one of claims 1-11.

13. An electronic device (1102), comprising:
a speaker;
one or more processors;
memory; and
one or more programs, wherein the one or more programs are stored in the memory and configured to be executed by the one or more processors, the one or more programs including instructions for performing the methods of any one of claims 1-11.

## Patentansprüche

1. Verfahren zum Verwenden von Sprachinteraktion, um auf anrufbezogene Informationen einer Begleitvorrichtung (1104) zuzugreifen, das Verfahren umfassend:
an der elektronischen Vorrichtung (1102), die einen Prozessor, einen Speicher und einen Lautsprecher aufweist:
Empfangen einer Benutzeräußerung (1110), die eine Anforderung für anrufbezogene Informationen darstellt, die auf der Begleitvorrichtung gespeichert sind, wobei die anrufbezogenen Informationen Informationen umfassen, die auf der Begleitvorrichtung gespeichert sind, basierend auf einem oder mehreren Anrufen, die von der Begleitvorrichtung empfangen werden, bevor die elektronische Vorrichtung die Benutzeräußerung empfängt;
Veranlassen eines Servers (1106), basierend auf der Benutzeräußerung, eine Benutzer-Intention des Bereitstellens der anrufbezogenen Informationen zu bestimmen;
Empfangen, von dem Server, eines Befehls (1114), der eine Aufgabe darstellt, um die Benutzer-Intention des Bereitstellens der anrufbezogenen Informationen zu erfüllen;
Bestimmen, basierend auf den Befehls- und Kontextinformationen, dass die Begleitvorrichtung den Befehl ausführen soll;
gemäß einer Bestimmung, dass die Begleitvorrichtung den Befehl ausführen soll, Bereitstellen von Anweisungen (1116) an die Begleitvorrichtung, um die anrufbezogenen Informationen abzurufen und die anrufbezogenen Informationen an die elektronische Vorrichtung zu senden (1118); und
gemäß den Anweisungen, die die Begleitvorrichtung erfolgreich veranlassen, die anrufbezogenen Informationen abzurufen und an die elektronische Vorrichtung zu senden, Bereitstellen einer Audioausgabe an dem Lautsprecher, wobei die Audioausgabe die anrufbezogenen Informationen einschließt, die von der Begleitvorrichtung empfangen werden.

2. Verfahren nach Anspruch 1, wobei die anrufbezogenen Informationen eine Sprachmitteilungs-Audiodatei umfassen, die auf der Begleitvorrichtung gespeichert ist, und
wobei die Sprachmitteilungs-Audiodatei Anrufinformationen für eine Sprachmitteilung und eine Audioaufzeichnung der Sprachmitteilung umfasst.

3. Verfahren nach Anspruch 2, wobei die Audioausgabe an dem Lautsprecher eine erste gesprochene Dialogantwort und die Audioaufzeichnung der Sprachmitteilung umfasst, und wobei die erste gesprochene Dialogantwort die Anrufinformationen für die Sprachmitteilung umfasst und das Verfahren ferner umfassend:
nach dem Empfangen der anrufbezogenen Informationen an der elektronischen Vorrichtung und vor dem Bereitstellen der Audioausgabe mit dem Lautsprecher:
Senden, an den Server, einer Darstellung der Anrufinformationen für die Sprachmitteilung; und
Empfangen, von dem Server, der ersten gesprochenen Dialogantwort, umfassend die Anrufinformationen.

4. Verfahren nach einem der Ansprüche 1 bis 3, wobei die anrufbezogenen Informationen Anruferinformationen umfassen, die auf der Begleitvorrichtung für einen oder mehrere entgangene Anrufe gespeichert sind.

5. Verfahren nach Anspruch 4, wobei die Audioausgabe an dem Lautsprecher eine zweite gesprochene Dialogantwort umfasst, und
wobei die zweite gesprochene Dialogantwort die Anruferinformationen umfasst, die dem einen oder den mehreren entgangenen Anrufen entsprechen.

6. Verfahren nach einem der Ansprüche 1 bis 5, wobei der Befehl einen umsetzbaren Intentionsknoten spezifiziert, der der Benutzer-Intention entspricht, und wobei die Anweisungen den Befehl einschließen.

7. Verfahren nach einem der Ansprüche 1 bis 6, wobei die Kontextinformationen angeben, dass die Begleitvorrichtung Telefonfähigkeiten aufweist.

8. Verfahren nach einem der Ansprüche 1 bis 7, ferner umfassend:
an der elektronischen Vorrichtung:
vor dem Empfangen der Benutzeräußerung, Austauschen von Authentifizierungsinformationen mit der Begleitvorrichtung; und
gemäß einer Bestimmung, basierend auf den Authentifizierungsinformationen, dass die Begleitvorrichtung eine registrierte Vorrichtung der elektronischen Vorrichtung ist, Herstellen einer drahtlosen Kommunikationsverbindung mit der Begleitvorrichtung,
wobei die Anweisungen über die hergestellte drahtlose Kommunikationsverbindung bereitgestellt werden, und
wobei die anrufbezogenen Informationen über die hergestellte drahtlose Kommunikationsverbindung empfangen werden.

9. Verfahren nach Anspruch 8, wobei die Kontextinformationen angeben, dass die drahtlose Kommunikationsverbindung zwischen der elektronischen Vorrichtung und der Begleitvorrichtung hergestellt wird.

10. Verfahren nach einem der Ansprüche 1 bis 9, ferner umfassend:
nach dem Bereitstellen der Anweisungen an die Begleitvorrichtung, Empfangen eines Bestätigungssignals von der Begleitvorrichtung, wobei das Bestätigungssignal angibt, ob die anrufbezogenen Informationen erfolgreich abgerufen wurden; und
Bereitstellen einer Darstellung des Bestätigungssignals an den Server.

11. Verfahren nach einem der Ansprüche 1 bis 10, ferner umfassend:
Bestimmen, an der elektronischen Vorrichtung, ob ein erster Abschnitt der Benutzeräußerung einen vordefinierten gesprochenen Auslöser enthält; und
gemäß einer Bestimmung, dass der erste Abschnitt der Benutzeräußerung einen vordefinierten gesprochenen Auslöser enthält, Empfangen eines zweiten Abschnitts der Benutzeräußerung, der von dem ersten Abschnitt getrennt ist, wobei die Benutzer-Intention aus dem zweiten Abschnitt der Benutzeräußerung bestimmt wird.

12. Nichttransitorisches, computerlesbares Speichermedium, das ein oder mehrere Programme speichert, das eine oder die mehreren Programme umfassend Anweisungen, die, wenn sie durch einen oder mehrere Prozessoren einer elektronischen Vorrichtung mit einem Lautsprecher angewendet werden, veranlassen, dass die elektronische Vorrichtung die Verfahren nach einem der Ansprüche 1 bis 11 ausführt.

13. Elektronische Vorrichtung (1102), umfassend:
einen Lautsprecher;
einen oder mehrere Prozessoren;
einen Speicher; und
ein oder mehrere Programme, wobei das eine oder die mehreren Programme in dem Speicher gespeichert und konfiguriert sind, um durch den einen oder die mehreren Prozessoren ausgeführt zu werden, wobei das eine oder die mehreren Programme Anweisungen zum Durchführen der Verfahren nach einem der Ansprüche 1 bis 11 einschließen.

## Revendications

1. Procédé d'utilisation d'une interaction vocale pour accéder à informations relatives à un appel, d'un dispositif compagnon (1104), le procédé comprenant :
au niveau d'un dispositif électronique (1102) ayant un processeur, de la mémoire et un haut-parleur :
la réception d'une déclaration d'utilisateur (1110) représentant une demande pour des informations relatives à un appel, stockées sur le dispositif compagnon, les informations relatives à un appel comprenant des informations stockées sur le dispositif compagnon en fonction d'un ou plusieurs appels reçus par le dispositif compagnon avant que le dispositif électronique ne reçoive la déclaration d'utilisateur ;
le fait d'amener un serveur (1106) à déterminer, en fonction de la déclaration d'utilisateur, une intention d'utilisateur de fourniture d'informations relatives à un appel ;
la réception, depuis le serveur, d'une commande (1114) représentant une tâche pour respecter l'intention d'utilisateur de fourniture d'informations relatives à un appel ;
la détermination, en fonction de la commande et d'informations contextuelles, que le dispositif compagnon doit exécuter la commande ;
conformément à une détermination que le dispositif compagnon doit exécuter la commande, la fourniture d'instructions (1116) au dispositif compagnon pour récupérer les informations relatives à un appel et envoyer (1118) les informations relatives à un appel au dispositif électronique ; et
conformément aux instructions amenant avec succès le dispositif compagnon à récupérer et envoyer les informations relatives à un appel au dispositif électronique, la fourniture d'une sortie audio au niveau du haut-parleur, la sortie audio comportant les informations relatives à un appel, reçues du dispositif compagnon.

2. Procédé selon la revendication 1, dans lequel les informations relatives à un appel comprennent un fichier audio de messagerie vocale stocké sur le dispositif compagnon, et
dans lequel le fichier audio de messagerie vocale comprend des informations d'appel pour une messagerie vocale et un enregistrement audio de la messagerie vocale.

3. Procédé selon la revendication 2, dans lequel la sortie audio au niveau du haut-parleur comprend une première réponse de dialogue parlé et l'enregistrement audio de la messagerie vocale, et
dans lequel la première réponse de dialogue parlé comprend les informations d'appel pour la messagerie vocale, et le procédé comprenant en outre :
après réception des informations relatives à un appel au niveau du dispositif électronique et avant de fournir la sortie audio au niveau du haut-parleur :
l'envoi, vers le serveur, d'une représentation des informations d'appel pour la messagerie vocale ; et
la réception, depuis le serveur, de la première réponse de dialogue parlé comprenant les informations d'appel.

4. Procédé selon l'une quelconque des revendications 1 à 3, dans lequel les informations relatives à un appel comprennent des informations d'appelant stockées sur le dispositif compagnon pour un ou plusieurs appels en absence.

5. Procédé selon la revendication 4, dans lequel la sortie audio au niveau du haut-parleur comprend une seconde réponse de dialogue parlé, et
dans lequel la seconde réponse de dialogue parlé comprend les informations d'appelant correspondant au ou aux appels en absence.

6. Procédé selon l'une quelconque des revendications 1 à 5, dans lequel la commande spécifie un noeud d'intention réalisable correspondant à l'intention d'utilisateur, et dans lequel les instructions comportent la commande.

7. Procédé selon l'une quelconque des revendications 1 à 6, dans lequel les informations contextuelles indiquent que le dispositif compagnon a des capacités de téléphone.

8. Procédé selon l'une quelconque des revendications 1 à 7, comprenant en outre :
au niveau du dispositif électronique :
avant réception de la déclaration d'utilisateur, l'échange d'informations d'authentification avec le dispositif compagnon ; et
conformément à une détermination, en fonction des informations d'authentification, que le dispositif compagnon est un dispositif enregistré du dispositif électronique, l'établissement d'une connexion de communication sans fil avec le dispositif compagnon,
dans lequel les instructions sont fournies par l'intermédiaire de la connexion de communication sans fil établie, et
dans lequel les informations relatives à un appel sont reçues par l'intermédiaire de la connexion de communication sans fil établie.

9. Procédé selon la revendication 8, dans lequel les informations contextuelles indiquent que la connexion de communication sans fil est établie entre le dispositif électronique et le dispositif compagnon.

10. Procédé selon l'une quelconque des revendications 1 à 9, comprenant en outre :
après fourniture des instructions au dispositif compagnon, la réception d'un signal de confirmation provenant du dispositif compagnon, le signal de confirmation indiquant si les informations relatives à un appel ont été récupérées avec succès ; et
la fourniture d'une représentation du signal de confirmation au serveur.

11. Procédé selon l'une quelconque des revendications 1 à 10, comprenant en outre :
le fait de déterminer, au niveau du dispositif électronique, si une première partie de la déclaration d'utilisateur contient un déclencheur parlé prédéfini ; et
conformément à une détermination que la première partie de la déclaration d'utilisateur contient un déclencheur parlé prédéfini, la réception d'une seconde partie de la déclaration d'utilisateur distincte de la première partie, l'intention d'utilisateur étant déterminée à partir de la seconde partie de la déclaration d'utilisateur.

12. Support de stockage non transitoire lisible par ordinateur stockant un ou plusieurs programmes, le ou les programmes comprenant des instructions, qui lorsqu'elles sont exécutées par un ou plusieurs processeurs d'un dispositif électronique avec un haut-parleur, amènent le dispositif électronique à effectuer les procédés selon l'une quelconque des revendications 1 à 11.

13. Dispositif électronique (1102), comprenant :
un haut-parleur ;
un ou plusieurs processeurs ;
de la mémoire ; et
un ou plusieurs programmes, le ou les programmes étant stockés dans la mémoire et configurés pour être exécutés par le ou les processeurs, le ou les programmes comportant des instructions pour effectuer les procédés selon l'une quelconque des revendications 1 à 11.
